# EUROPEAN PATENT APPLICATION

(11) **EP 1 280 115 A2**
(43) Date of publication of application: **29.01.2003**
(21) Application number: 02015629.5
(22) Date of filing: 16.07.2002
(51) Int. Cl.: G07F 19/00, G07F 7/08

(54) **Electronic payment method, system, and devices**

(30) Priority: 23.07.2001 JP 2001222163; 29.01.2002 JP 2002020410
(71) Applicant: NTT DoCoMo, Inc., Tokyo 100-6150 (JP)
(72) Inventor: Kinoshita, Masaki, NTT DoCoMo, Inc.,, Chiyoda-ku, Tokyo 100-6150 (JP); Yoshida, Junichi, NTT DoCoMo, Inc.,, Chiyoda-ku, Tokyo 100-6150 (JP); Nakajima, Atsushi, NTT DoCoMo, Inc.,, Chiyoda-ku, Tokyo 100-6150 (JP); Tanaka, Manabu, NTT DoCoMo, Inc.,, Chiyoda-ku, Tokyo 100-6150 (JP); Hanada, Kazutoyo, NTT DoCoMo, Inc.,, Chiyoda-ku, Tokyo 100-6150 (JP); Yasuda, Jun, NTT DoCoMo, Inc.,, Chiyoda-ku, Tokyo 100-6150 (JP); Tomita, Syuichi, NTT DoCoMo, Inc.,, Chiyoda-ku, Tokyo 100-6150 (JP); Nakamura, Taijiro, NTT DoCoMo, Inc.,, Chiyoda-ku, Tokyo 100-6150 (JP); Ishibashi, Hideaki, NTT DoCoMo, Inc.,, Chiyoda-ku, Tokyo 100-6150 (JP)
(74) Representative: HOFFMANN - EITLE

(57) **Abstract**

A portable device authenticates a user of the portable device. If authenticity of the user is confirmed, a user ID is transmitted to a POS terminal. Upon receipt of the user ID, the POS terminal sends a request for payment including the user ID and transaction information to a payment gateway. Upon receipt of the request, the payment gateway sends an e-mail to the portable device to execute an application for payment stored in the portable device.

## Description

### Background of the Invention

### Field of the Invention

The present invention relates generally to a method, system, and devices used for electronic financial transactions between financial institutions connected by a network.

### Description of the Related Art

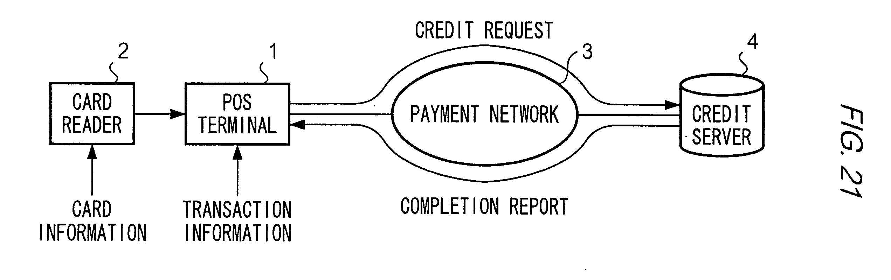

Electronic payment using a credit card is known in the art. As an example, a prior system for electronic payment is shown in fig. 21.

When a people (purchaser) buys goods at a shop, firstly, a clerk inputs transaction data including the name of goods, quantity, price, and tax into a Point of Sales (POS) terminal 1 provided at the shop. Secondly, he/she hand his/her credit card to the clerk. Thirdly, the clerk sets the card to a Card reader 2. Card reader reads out information such as a card number and expiration date stored in the card. Next, this card information is supplied to POS terminal 1. Upon receipt the information, POS terminal 1 makes a request for credit by adding information on the shop (merchant) to the card information and transaction data and sends it to a Credit server 4 managed by a credit card company via a Network 3 such as Credit Finance Information Switching Systems (CAFIS). Credit server 4 checks the card information included in the request sent by POS terminal 11. Finally, if Credit server 4 accepts authenticity of the card, it sends a completion message to POS terminal 1. In such a system, a consumer buys goods without carrying cash.

However, it is known that there is a security concern in such a system. Since a purchaser has to hand his/her credit card to a clerk in paying by a credit card, there is a danger that unauthorized persons improperly use the card. Furthermore, there is always a possibility of dropping off a credit card. In other words, a consumer necessarily takes risks that a stranger uses his/her credit card illegally.

The present invention has been made with a view to overcome the above problem and it is an object of the present invention to provide a method, system, server, terminal, computer program, and storage medium to conduct electronic financial transactions.

### Summary of the Invention

To achieve the above aim, an electronic payment method of the present invention comprises the steps of:
authenticating a user of a user terminal on the basis of user identification information inputted to the user terminal by the user, by the user terminal; storing an authentication result of the user, by the user terminal when the user terminal confirms authenticity of the user;
transmitting a user identification information stored beforehand in the user terminal to a merchant terminal when the user terminal confirms authenticity of the user, by the user terminal;
transmitting to payment device via a first communication network the user identification information and transaction information transmitted from the user terminal, by the merchant terminal;
receiving the user identification information and the transaction information transmitted from the merchant terminal, by the payment device;
identifying the user terminal on the basis of the user identification information and transmitting commands for instructing transmission of the authentication result to the user terminal via a second communication network;
transmitting authenticity of the user to the payment device via the second communication network if the user terminal stores authenticity of the user, by the user terminal; and
performing payment processing on the basis of the transaction information upon receipt of the authenticity from the user terminal, by the payment device.

In an electronic payment system in which the above method is applied, a user is able to pay by credit card using a terminal without handing a credit card to a clerk, thereby preventing a third-party including a clerk from using the card improperly. Furthermore, since the user terminal authenticates a user, if a third-party obtains a user terminal improperly, the terminal cannot be used for payment in the electronic payment system by the third-party. Furthermore, the payment device identifies a user to which authentication result is transmitted. In other words, the only user terminal that the payment device specifies can proceed payment processes. Thus, the danger of an improper use by a third-party of the user terminal is reduced. Furthermore, the user terminal transmits an authentication result according to the commands send from the payment device, in other words, a user does not have to operate the user terminal for the transmission. Therefore, the danger of stop of payment processing due to misoperation by a user is prevented.

In a preferred embodiment, an electronic payment method of the present invention comprises the steps of:
authenticating a user of a user terminal on the basis of user identification information inputted to the user terminal by the user, by the user terminal;
transmitting user identification information for identifying a user to a merchant terminal, by the user terminal, when the user terminal confirms authenticity of the user;
transmitting to a payment device via a first commutation network the user identification information transmitted from the user terminal, by the merchant terminal;
receiving the user identification information from the merchant terminal, by the payment device;
identifying the user terminal referring to received user identification information and transmitting commands for executing an application for payment stored in the user terminal to identified user terminal via a second communication network, by the payment device;
upon receipt of the commands, executing the application to transmit a request for proceeding payment processing to the payment device via the second communication network, by the user; and
upon receipt of the request from the user terminal, performing a payment processing.

In this embodiment the payment device identifies a user terminal on the basis of user identification information and sends commands so that the user terminal can execute application for payment stored in the user terminal. In other words, both a user and a user terminal are authenticated, thereby ensuring security against authorized person greatly. In addition, a user's convenience is improved because a user does not have to carry out troublesome operation necessary for payment.

In another embodiment, an electronic payment method comprises the steps of:
receiving from a merchant terminal a user identification information for identifying a user of a user terminal, by a receiving unit;
retrieving from a storage unit a card number corresponding to the
identified user, by a retrieving unit;
encrypting the retrieved card number, by an encrypting unit;
generating a key for decryption of the encrypted card number, by a generating unit;
transmitting to the merchant terminal the encrypted card number, by a first transmitting unit; and
transmitting the key to a credit server managed by an issuer of the credit card, by a second transmitting unit.

In an electronic payment system in which a method of this embodiment of the present invention is used, a user is able to pay by credit card to a merchant in a way that the merchant does not know a card number because a credit card number is encrypted for transmission to the merchant. Specifically, a payment device determines a card to be encrypted on the basis of the user identification information. On the other hand, the credit server obtains a card number by decrypting an encrypted card number using the key for decryption received from the payment device, thus the credit server is able to carry out payment processing. Further, since the encrypted card number is generated each time a transaction is conducted, the merchant can manage sales at the shop using the encrypted card number although the merchant does not know card numbers.

An electronic payment system of the present invention has a payment device, a merchant terminal connected with the payment device via a first communication network, and a user terminal connected with the payment device via a second communication network and is characterized in that:
the user terminal authenticates a user of the user terminal on the basis of user identification information inputted to the user terminal by the user;
if authenticity of the user is confirmed, stores authentication result; and
transmits to the merchant terminal user identification information stored in the user terminal;
the merchant terminal transmits to the payment device via the first communication network the user identification information transmitted from the user terminal and transaction information;
the payment device identifies the user terminal on the basis of the user identification information transmitted from the merchant terminal and
transmits to the identified user terminal via the second communication network commands for instructing transmission of the authentication result;
the user terminal transmits to the payment device via the second communication network according to the commands transmitted from the payment device when the user terminal stores the authentication result; and
upon receipt of the authentication result from the user terminal, the payment device performs payment processing on the basis of the transaction information.

In a preferred embodiment, an electronic payment system of the present invention is characterized in that:
the user terminal authenticates a user on the basis of the user identification information inputted to the user terminal by the user;
if authenticity of the user is confirmed, transmits to the merchant terminal a user identification information for identifying the user;
the merchant terminal transfers the user identification information to the payment device via the first communication network;
the payment device identifies the user terminal on the basis of the user identification information and transmits to the identified user terminal via the second communication network commands for executing an application for payment stored in the user terminal;
the user terminal executes the application according to the commands and
transmits a request for proceeding payment processing to the payment device via the second communication network; and
the payment device performs the payment processing according to the request.

A communication terminal used for an electronic payment system of the present invention has a payment device connected with a first and a second communication network and a merchant terminal connected with the payment device via a first communication network and comprises:
an authenticating means for authenticating a user of the communication terminal on the basis of a user identification information inputted to the user terminal by the user;
a storing means for storing an authentication result when authenticity of the user is confirmed by the authenticating means;
a storage medium for storing the user identification information;
a first transmitting means for transmitting, when authenticity of the user is confirmed, the user identification information stored in the storage means to the merchant terminal so that the merchant terminal transmits to the payment device a request for payment processing including the user identification information;
a receiving means for receiving commands for instructing transmission of the authentication result which is transmitted, in response to the request for payment, from the payment device via the second communication network; and
a second transmitting means for transmitting, upon receipt of the commands, a request for proceeding the payment processing including the authentication result to the payment device via the second communication network.

In a preferred embodiment, a communication terminal used for the electronic payment system comprises:
an authenticating means for authenticating a user of the communication terminal on the basis of a user identification information inputted to the user terminal by the user;
a first transmitting means for transmitting, when authenticity of the user is confirmed, the user identification information stored in the storage means to the merchant terminal so that the merchant terminal transmits to the payment device a request for payment processing including the user identification information
a receiving means for receiving commands for executing an application for payment which is transmitted from the payment device via the second communication network; and
a second transmitting means for executing the application for payment stored in the user terminal and transmitting, according to the application, a request for proceeding payment processing to the payment device via the second communication network.

A payment device of the present invention comprises:
a receiver for receiving a request for payment including a user identification information for identifying a user of a user terminal from a merchant terminal via a first communication network;
an identifying means for identifying the user terminal among registered user terminal on the basis of the received user identification information; a transmitter for transmitting to the identified user terminal via a second communication network commands for executing an application for payment stored in the user terminal; and
a processing means for performing a payment processing on the basis of a request sent from the user terminal via the second communication network after transmission of the commands.

In another embodiment, a payment device comprises:
a storage unit for storing a user identification information for identifying a user of a user terminal and a card number of a credit card correspondingly; a receiving unit for receiving from a merchant terminal a user identification information;
a retrieving unit for retrieving from the storage unit a card number corresponding to the identified user;
an encrypting unit for encrypting the retrieved card number;
a generating unit for generating a key for decryption of the encrypted card number;
a first transmitting unit for transmitting to the merchant terminal the encrypted card number; and
a second transmitting unit for transmitting the key to a credit server managed by an issuer of the credit card.

A computer program product of the present invention makes a computer incorporated into a communication terminal used for the electronic payment system having a payment device connected with a first and a second communication network and a merchant terminal connected with the payment device via a first communication network to execute the steps of:
authenticating a user of the communication terminal on the basis of a user identification information inputted to the user terminal by the user;
storing an authentication result into a storage means when authenticity of the user is confirmed by the authenticating means;
transmitting, when authenticity of the user is confirmed, the user identification information stored in the storage means to the merchant terminal so that the merchant terminal transmits to the payment device a request for payment processing including the user identification information;
receiving commands for instructing transmission of the authentication result which is transmitted, in response to the request for payment, from the payment device via the second communication network; and
transmitting, upon receipt of the commands, a request for proceeding the payment processing including the authentication result to the payment device via the second communication network.

In another embodiment, a computer program product makes a computer to execute the steps of:
receiving from a merchant terminal a user identification information for identifying a user of a user terminal;
retrieving from a storage unit a card number corresponding to the identified user;
encrypting the retrieved card number;
generating a key for decryption of the encrypted card number; transmitting to the merchant terminal the encrypted card number; and
transmitting the key to a credit server managed by an issuer of the credit card.

A storage medium of the present invention stores the above computer program products.

### Brief description of the drawings

Fig.1 is a conceptual block diagram to illustrate an electronic payment system based on the first embodiment of the present invention.
Fig.2 is a block diagram to illustrate a portable device used in the system.
Fig.3 illustrates a UIM mounted detachably to the portable device.
Fig.4 shows a storage area of EEPROM in the UIM.
Fig.5 is a block diagram to illustrate a POS terminal and a mobile terminal used in the system.
Fig.6 is a block diagram illustrating a payment gateway used in the system.
Fig.7 illustrates data items stored in a user table in a hard drive of the gateway.
Fig.8 illustrates data items stored in a transaction table in a hard drive of the gateway.
Fig.9 illustrates data items stored in an issuer table in a hard drive of the gateway.
Fig.10 illustrates data items stored in a merchant table in a hard drive of the gateway.
Fig.11 is a sequence flowchart illustrating payment processing in the system.
Fig.12 is a flowchart illustrating a processing performed by the portable device.
Fig.13 illustrates a screen displayed on a display of the portable device.
Fig.14 is a flowchart illustrating a processing performed by the portable device.
Fig.15 is a flowchart illustrating a processing performed by the portable device.
Fig.16 illustrates a screen displayed on a display of the portable device.
Fig.17 illustrates a screen displayed on a display of the portable device.
Fig.18 is a flowchart illustrating a processing performed by the POS terminal.
Fig.19 is a flowchart illustrating a processing performed by the payment gateway.
Fig.20 is a conceptual block diagram illustrating an electronic payment system based on a modification of the first embodiment.
Fig.21 illustrates an electronic payment system of the prior art.
Fig.22 illustrates an electronic payment system based on the second embodiment.
Fig.23 illustrates an example of date items stored in a POS terminal.
Fig.24 illustrates an example of date items stored in a credit server.
Fig.25 illustrates an example of date items stored in a storage unit of a payment gateway.
Fig.26 is a flowchart illustrating a method for payment used in the system.
Fig.27 is a flowchart illustrating a method for payment used in the system.
Fig.28 is a conceptual block diagram to illustrate a computer program for payment based on the second embodiment.

### Detailed Description

### (First embodiment)

The first embodiment of the present invention will now be described referring to the drawings.

### A. Configuration of the system

### A-1. Overall configuration

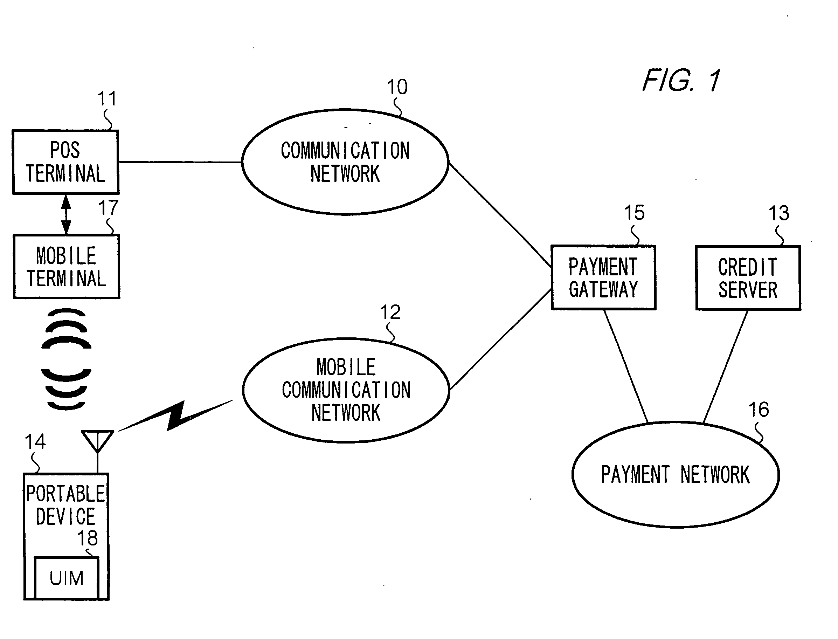

Fig. 1 shows that a system to which a method for electronic payment of the present invention based on the first embodiment is applied. As shown therein, the system comprises (a) a POS terminal 11 connected to a communication network 10, (b) a payment gateway 15 connected to Communication network 10, a mobile communication network 12, and a payment network 16, (c) a portable device 14 by which a user obtains communication services via Mobile communication network 12, (d) a credit server 13 connected to Payment network 16, and (e) a mobile terminal 17. For the sake of simplicity, only one POS terminal 11 and one Portable device 14 is shown in the figure. In actuality, a plurality of POS terminals are connected to Communication network 10 and many portable devices are connected to Mobile communication network 12.

A mobile communication network 12 includes mobile telephone networks in which Personal digital Cellular (PDC) scheme, Code Division Multiple Access (CDMA) scheme, or other schemes is used and data communication networks in which PDC-Packet (PDC-P) scheme is used. Each network has base stations which are not shown. Each base station covers an area and carries out radio communications with portable devices 14 within the area. Therefore, Portable device 14 is able to carry out voice and data communications by radio via Mobile communication network 12. A payment gateway 15 is connected to Mobile communication system 12, thus Portable device 14 is able to carry out data communications with Payment gateway 15.

A POS terminal 11 and Payment gateway 15 are connected via Communication network 10. Specifically, Communication network 10 is a dedicated line to which many POS terminals 11 and Gateway system 15 are connected. Needless to say, Communication network 10 can be a fixed telephone network, a public network such as Internet, or a mobile communication network (possibly Mobile communication network 12).

A credit server 13 managed by a credit company and Gateway system 15 are connected via a payment network 16. Specifically, Payment network 16 is designed especially for credit payment such as Credit and Finance Information Switching Systems (CAFIS). Credit server 13 is a conventional server for credit payment. Specifically, upon receipt of a request for credit transmitted by a POS terminal via Payment network 16, Credit server 13 checks authenticity of a credit card. If the authenticity is confirmed, Server 13 carries out a payment processing before sending a completion message to the POS terminal.

An essence of the electronic transaction service using a method for paying electronic transactions based on this embodiment is as follows. When a user of Portable device 14 buys goods at a shop, the user uses Portable device 14 to make request for payment to Credit server 13 via POS terminal 11 and Payment gateway 15. As such, a user is able to pay without handing a credit card to others including a clerk. Components of this system will be described in detail below.

### A-2. Portable device

Portable device 14 has a function of carrying out wireless voice and data communications via Mobile communication network 12. Further, it has a function of carrying out short-range radio communication using Bluetooth, for example, to carry out data communications with POS terminal. In addition, the device 14 is able to mount a User Identity Module (UIM) detachably.

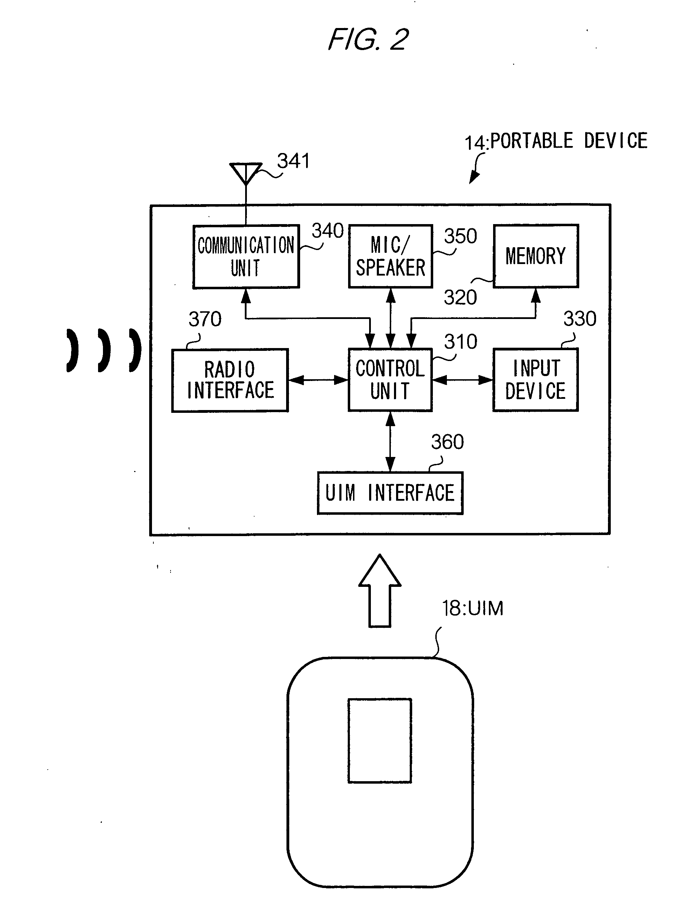

As shown in fig.2, Portable device 14 has a control unit 310, memory 320, control unit 330, communication unit 340, mic/speaker 350, UIM interface 360, and radio interface 370.

Control unit 310 has a Central processing unit (CPU) and other microprocessors to execute programs stored in Memory 320 to control each unit of the device 14 including reading/writing data from/to UIM 18.

Memory 320 includes a Read Only Memory (ROM), a Random Access Memory (RAM), and an Electrically Erasable and Programmable ROM (EEPROM) and has several storage areas, one of which is assigned for storing programs including programs for starting and proceeding payment described later, and another one of which is for storing data. Another program stored in Memory 320 is used for browsing, in other words, accessing a Web server on the Internet, downloading Hyper Text Markup Language (HTML) data or Compact-HTML (C-HTML) data, and displaying the data. Another one is used for sending and receiving e-mail. Control unit 310 executes these programs so that the user can browse and use e-mail.

Input device 330 has operation buttons such as a ten-key pad, which is not shown in the figure, to input information such as a telephone number and to select buttons or icons displayed on a liquid crystal display not shown in the figure. Communication unit 340 transmits data such as information on ordering via an antenna 341 under control of Control unit 34 land receives data send via Antenna 341. Mic/speaker 350 includes a microphone to input a sound and a speaker to output a sound.

UIM interface 360 supplies information outputted from Control unit 310 to UIM 18 and information outputted from UIM 18 to Control unit 310. Information stored in UIM 18 is used each time a user carries out voice and data communications by radio via Communication network 12. Radio interface 370 is used to carry out short-rage communication with POS terminal 11 by Bluetooth, for example.

### A-3. UIM

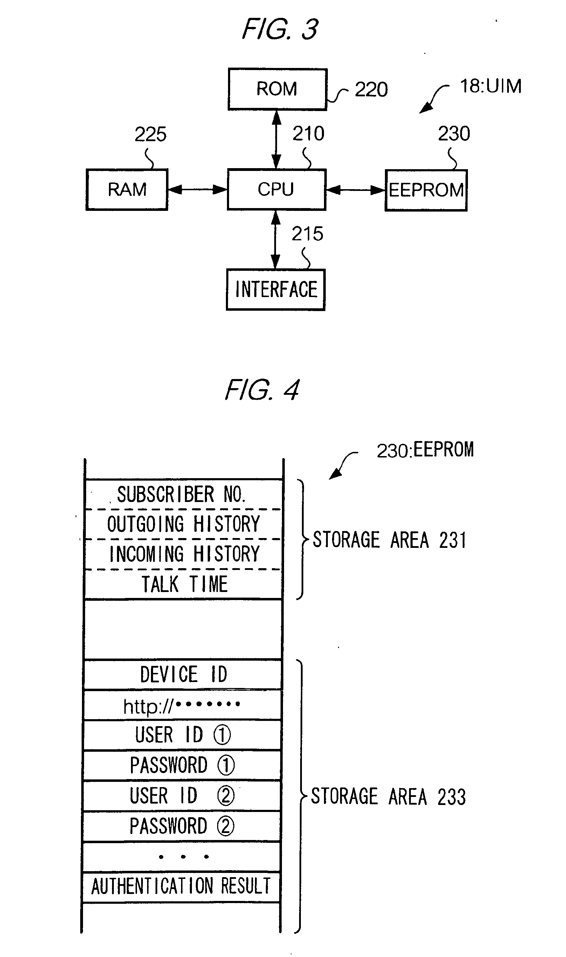

As shown in fig.3, UIM 18 is an Integrated Circuit (IC) card which is detachable/attachable and includes a CPU 210, interface 215, ROM 220, RAM225, and EEPROM 230. UIM 18 stores information unique to the user including a subscriber number and telephone book used for carrying out communication via Mobile communication network 12.

CPU210 executes a control program stored in ROM 220 to control each unit within UIM 18. Interface 215 connects UIM 18 with Portable device 14. ROM 220 is a nonvolatile memory and stores programs for analyzing and executing commands supplied from Portable device 14 and for managing data, for example, as well as the control program. RAM 225 is a rewritable memory for temporarily storing data supplied from Portable device 14. EEPROM 230 is a versatile and is rewritable. EEPROM 230 stores information necessary for communication with Portable device 14.

Fig.4 shows storage areas in EEPROM. As shown, EEPROM 230 has storage areas 231 and 233.

Storage area 231 stores subscriber numbers, outgoing history, incoming history, talk time, telephone book data, and other information specific to user(s) of UIM 18. Storage area 233 stores information used when Portable device 14 starts a payment operation. Specifically, a device ID for identifying Portable device 14 uniquely is stored. For example, a user registers, in advance, Portable device 14 at a provider of this electronic financial transaction service to obtain the service using the device 14. After the registration, the provider gives the user the device ID.

In addition, Storage area 233 stores an address such as Uniform Resource Locator (URL), to connect with Payment gateway 15. Further, Storage area 233 stores pairs of a user ID and a password, each of which is used for an application for payment executed at the Portable device 14 when the user uses the electronic payment service. If the user possesses two or more credit cards, it is possible that each pair of a user ID and a password corresponds to each credit card. Furthermore, Storage area 233 has an area for authentication results which is used for the payment application.

When UIM 18 is attached to Portable device 14, information stored in UIM 18 can be supplied to Portable device via UIM interface 360, thereby allowing for Portable device 14 to carry out various functions including radio communication.

### A-4. POS terminal

POS terminal 11 is installed at a shop of a merchant participating in the electronic payment service. POS terminal 11 stores data necessary for managing information on financial transactions, sales, and customers, for example.

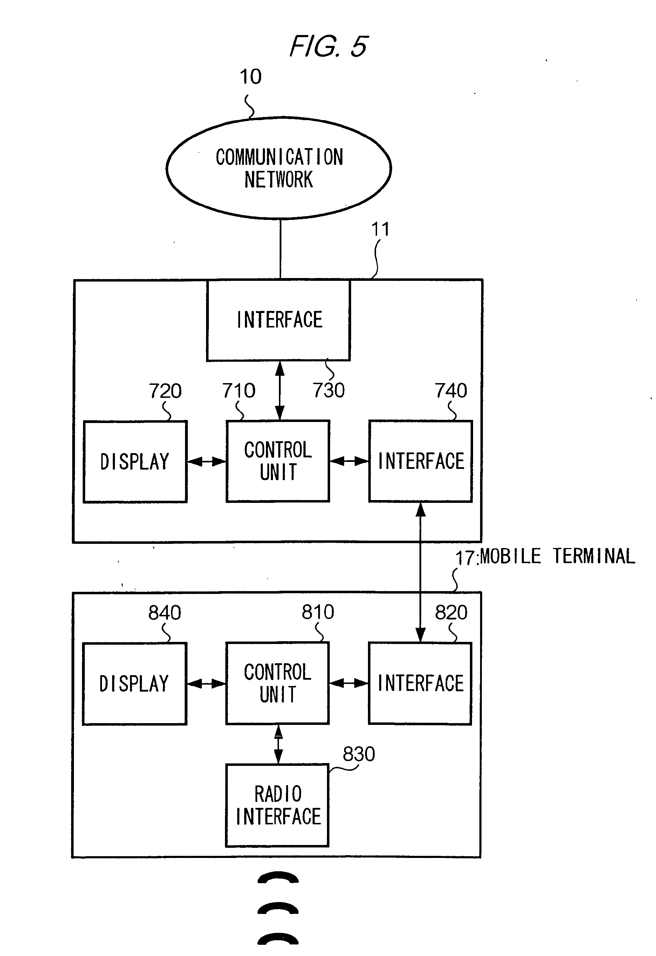

As shown in fig.5, POS terminal 11 has a control unit 710, a display 720, communication interface 730, and an interface 740.

Control unit 710 includes a CPU, a ROM, and a RAM and controls all units of POS terminal 11. Control unit 710 has the same function as a general POS terminal for managing information on financial transactions, sales, and customers. In addition, Control unit 710 has functions of controlling each unit to perform processing necessary for the electronic payment service. Display 720 includes a liquid crystal panel, for example, on which information on merchandise such as a name, price, quantity, tax, and total amount is displayed. Communication interface 730 carries out communication with Gateway system 15 via Communication network 10. Interface 740 is, for example, a general interface such as RS-232C or Universal Serial Bus (USB). POS terminal 11 is connected to Mobile terminal 17 through a cable to carry out data communication.

Mobile terminal 17 is, for example, a Personal Digital Assistants (PDA) or a laptop computer, which includes a control unit 810, interface 820, display 840, and radio interface 830.

Control unit 810 includes a CPU, ROM, RAM, and other modules and controls all units of POS terminal. Control unit 810 has the same functions as a general mobile terminal such as PDA. In addition, Control unit 810 has a function of controlling each unit to carry out processing necessary for the electronic transaction service.

Display 840 includes a liquid crystal panel to display information, for example. Interface 820 is, for example, a general interface such as RS-232C or Universal Serial Bus (USB). POS terminal 11 is connected to Mobile terminal 17 through a cable to carry out data communication. Radio interface 830 features short-range wireless communication with Portable device 14 via Bluetooth, for example.

### A-5. Payment gateway

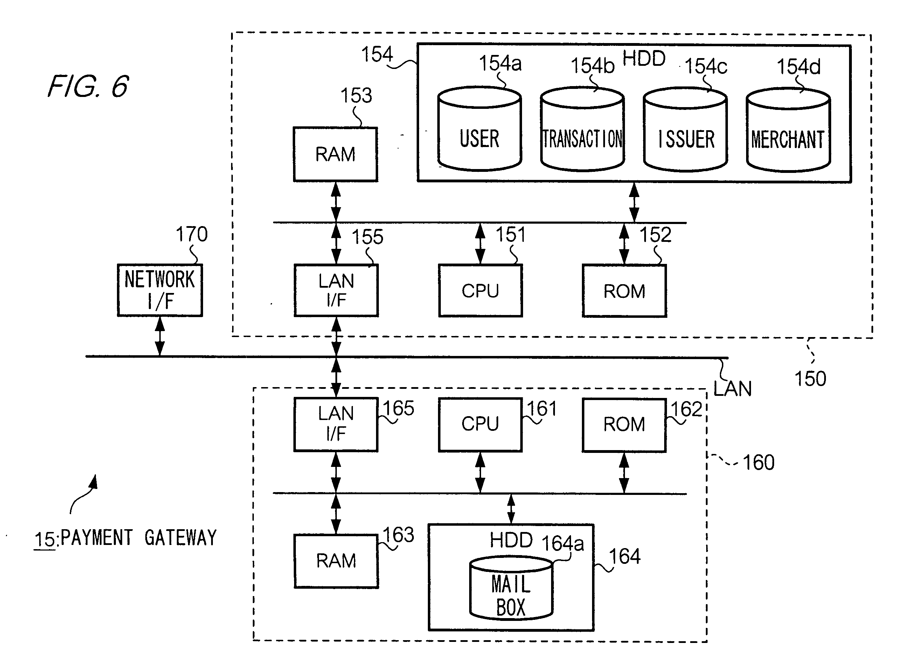

Payment gateway 15 for providing the electronic payment service using a method for electronic payment based on this embodiment is installed by a provider of the service. As shown in fig.6, Payment gateway 15 includes a payment server 150 connected to a Local Area Network (LAN), direction server 160, and a network interface (I/F) 170.

Network interface 170 is, for example, a router. Payment server 150 and direction server 160 exchanges data with POS terminal 10, Portable device 14, and Credit server 13 via Communication network, Mobile communication network, and Payment network 16, respectively.

Payment server 150 may be a personal computer or a workstation, including a CPU 151, ROM 152, RAM 153, hard drive 154, and LAN interface 155. Further, Payment server 150 includes an input device such as a keyboard and Cathode-ray Tube (CRT) or Liquid Crystal Display (LCD), allowing an administrator of Gateway system 15 to make reconfigurations including registration of users.

LAN interface 155 is used for exchange of data between Network interface 170 and Direction server 160 connected to the LAN.

CPU 151 performs arrhythmic computation as well controls each unit of Payment server 150. ROM 152 stores programs to be read out and executed by CPU 151. CPU uses RAM 153 as a work area.

Hard drive 154 stores application programs and data to be read out and executed by CPU 151 to control each unit for provision of the electronic transaction service. Hard drive 154 includes a user table 154a, transaction table 154b, issuer table 154c, and merchant table 154d.

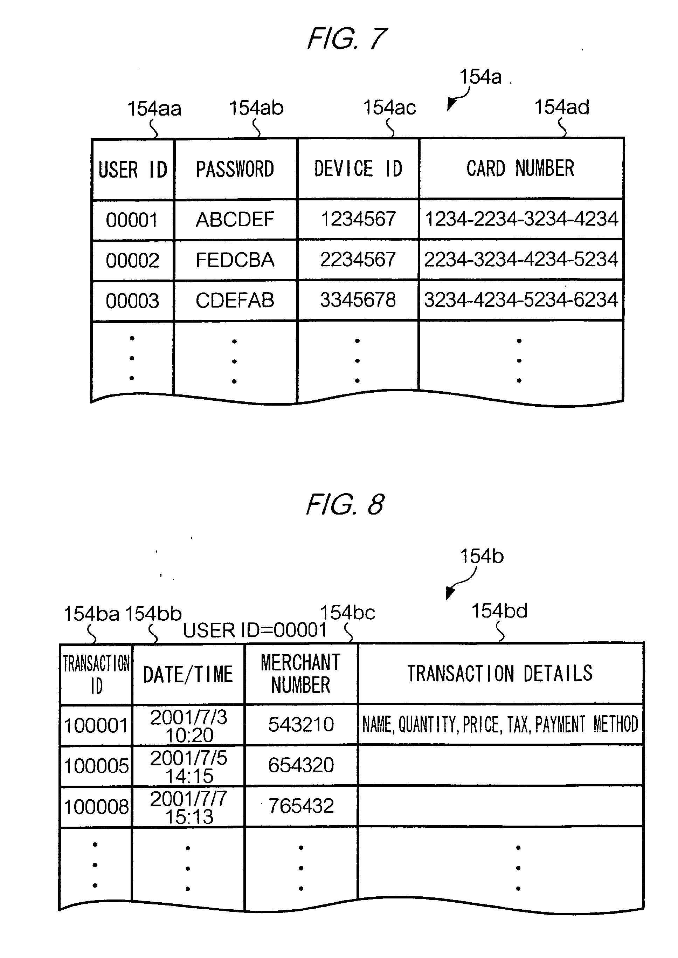

As shown in fig.7, user table 154a has four areas for user ID 154aa, password 154ab, terminal ID 154ac, and credit card number 154ad. A staffer of the provider of this service inputs the above information into User table 154a when a user subscribes to the service. It is possible that, if a subscriber has more than two credit cards and wants to obtain the service using these credit cards, the subscriber (user) has a plurality of user IDs each of which is corresponding to each credit card.

Area 154aa stores user IDs each of which identifies a subscriber uniquely. Area 154ab stores passwords each of which is used for authentication of a user. Area 154ac stores identification information each to identify Portable device 14 used for the electronic transaction service. The user IDs, passwords, and identification information stored in Hard drive 154 are the same stored in Storage area 233 in EEPROM 230 of UIM18 shown in fig. 4 Area 154ad stores credit card numbers of users. If a user has two or more credit cards, the user can specify one or more credit cards to be used for this service and thus stored in Area 154ad when the user subscribes to the service. In addition, Area 154ad stores expiration dates of the cards, which are not shown in the figures.

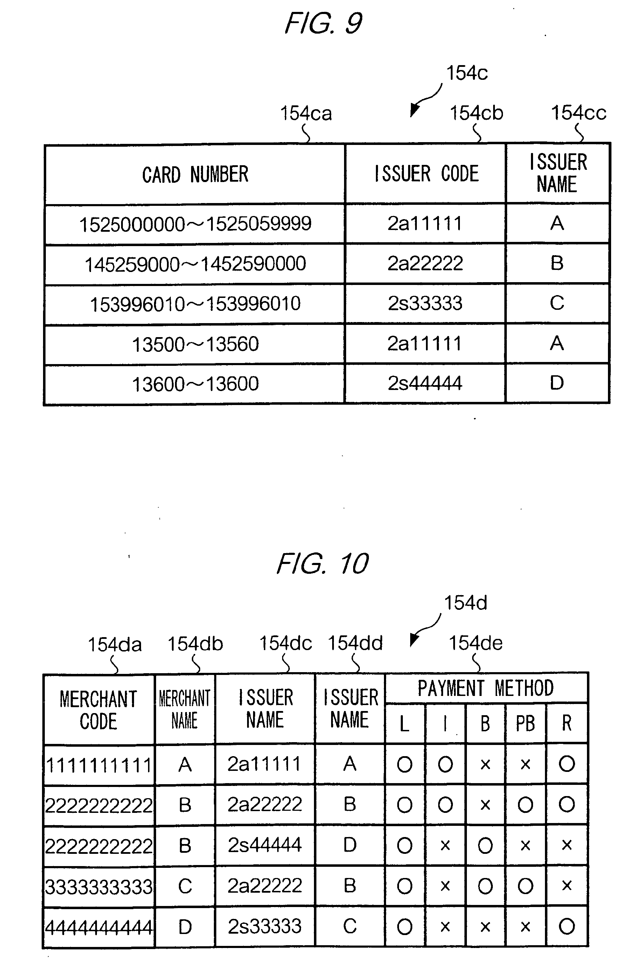

Referring back to fig. 6, Transaction table 154ab has areas for storing details of transactions conducted by users. Specifically, as shown in fig. 8, Transaction table 154ab corresponding to a subscriber having a user ID "00001" has four areas for transaction 154ba, for date 154bb, for merchant number 154bc, and for transaction details 154bd. Area 154ba stores IDs each of which identifies a transaction conducted by a user. It is noted that CPU 151 gives a transaction ID every time a transaction is conducted. Area 154bb stores dates and times of transactions each corresponding to each transaction ID. Area 154bc stores merchant numbers each identifying a shop where the transaction was conducted. A unique merchant number is assigned to all merchants in advance. Area 154bd stores details of transactions each corresponding to each transaction ID. Specifically, merchandise name, quantity, price, tax, payment method (lump-sum, installment, payment with bonus, payment partially with bonus, and, revolving, for example), and other related information on the transaction.

Referring again to fig. 6, Issuer table 154c stores information on credit companies and credit cards available for the service. Specifically, as shown in fig. 9, Issuer table 154c has three areas. Area 154ca stores ranges of card numbers. Area 154cb stores company codes each of which identifies corresponding credit company. Area 154cc stores names of credit companies. For example, fig. 9 shows that a credit card whose number lies within a range between "1525000000" and "1525059999" is issued by credit company "A".

Referring again to fig. 6, Merchant table 154d stores information on which cards and which methods of payment are available at a shop. Specifically, as shown in fig. 10, Merchant table 154d has four areas of 154da, 154db, 154dc, and 154dd. Area 154da stores codes each of which identifies each merchant. Area 154db stores merchant's names. Area 154dc stores codes each of which identifies a credit company, namely, issuer of a credit card available for the merchant, which is the same stored in Area 154cb shown in fig. 9. Area 154dd stores credit company's names. Area 154de stores payment methods in which a user can pay by a card. As an example, fig.10 shows that a user is able to arrange payment in a lump-sum, installments, or revolving system but neither payment with bonus nor payment partially with bonus is accepted. "L", "I", "B", "pB", and "R" represents lump sum, installments, bonus, bonus (partially), and revolving, respectively. Furthermore, detailed information such as the number of payment in installments and an available period in payment with bonus may be stored.

Direction server 160 will now be described referring to fig. 6. Direction server 160 may be a personal computer or a workstation, including a CPU 161, ROM 162, RAM 163, hard drive 164, and LAN interface 165. Further, Payment server 150 includes an input device such as a keyboard and Cathode-ray Tube (CRT) or Liquid Crystal Display (LCD). Detailed description of these devices is omitted.

LAN interface 165 is used for exchange of data between Network interface 170 and Payment server 150 connected to the LAN. CPU 161 performs arrhythmic computation as well controls each unit of Direction server 160. ROM 152 stores programs to be read out and executed by CPU 161. CPU uses RAM 163 as a work area. Hard drive 164 stores application programs and data to be read out and executed by CPU 161, to control each unit for provision of the electronic payment service. In addition, Hard drive 164 stores a mail box 164a used for the electronic transaction service. To be more specific, Mail box 164a includes mailboxes each corresponding to an e-mail account of Portable device 14.

Upon receipt of a request from Payment server 150, CPU 161 generates and stores e-mail into a mail box assigned to each Portable device 14 in Mail box 164a and sends a reception message to the Portable terminal 14 having an address indicated by the request. Upon receipt of the reception message, Portable device 14 accesses Mailbox 164a via Mobile communication network to obtain e-mails for Portable device 14. Namely, Direction server 160 a function as a mail server with features including sending a reception message.

### B. Operations of the system

### B-1. Overall sequence of the operations

An outline of sequence of operations carried out in this electronic payment system will now be described.

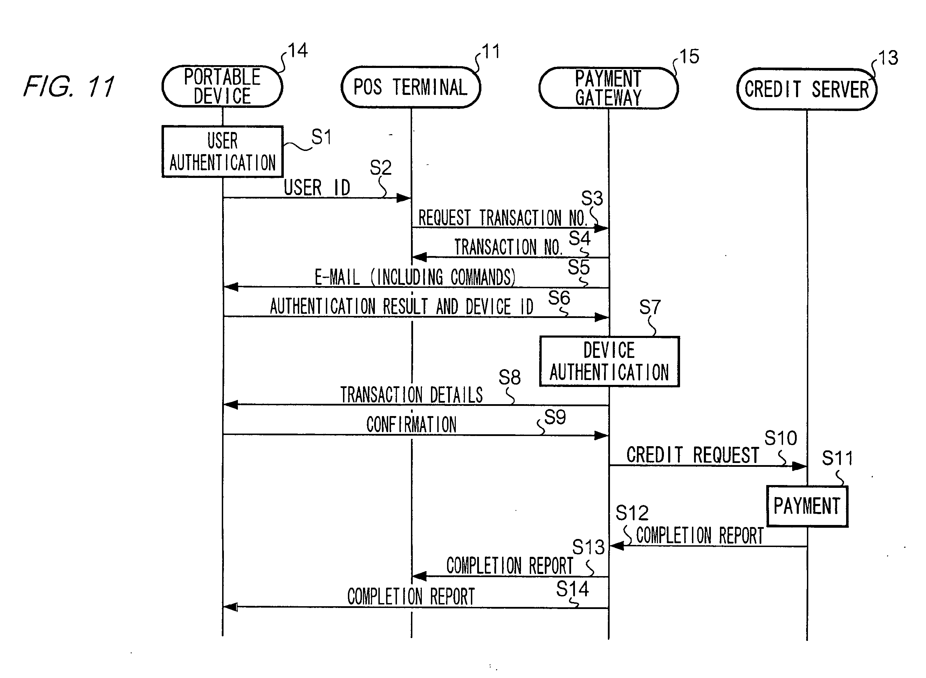

Fig. 11 is a sequence flowchart showing an outline of sequence of operations in which a user of Portable device 14 conducts a transaction (purchases goods) at a shop at which POS terminal 11 and Mobile terminal 17 are installed and obtains this electronic payment service for payment using Portable device 14.

As shown in fig. 11, firstly, a clerk inputs information on a transaction including a merchandise name, quantity, price, tax into POS terminal 11 at a shop. If a purchaser wants to pay using this electronic payment service, the purchaser operates his/her Portable device 14 to execute an application program for the electronic payment. And an input screen for a user ID and a password to be used for authentication is displayed on a display of Portable device 14.

The purchaser (the user of Portable device 14) operates ten-key pad or the like, to input a user ID and a password. Portable device 14 checks the user ID and password against those stored in UIM 18, to authenticate the user (step S1).

If the authentication failed, Portable device 14 notifies the user that the user is not a right person and thus rejected before carrying out error processing, for example, terminating the processing. If the authentication is completed, Portable device 14 sends the user ID stored in UIM 18 to Mobile terminal 17 by short-range wireless communication. The user ID is transferred from Mobile terminal 17 to POS terminal 11 (step S2). In addition, Portable device 14 stores the authentication result representing authenticity of the user into Storage area 233 of UIM18. It is noted that Mobile terminal 17 is omitted in fig. 1, for sake of simplicity. But in reality data is exchanged via Mobile terminal 17 between POS terminal 11 and Portable device 14.

Upon receipt of a user ID sent from portable device 14 via Mobile terminal 17, POS terminal 11 sends to Payment gateway 15 via Communication network 10 transaction information, the user ID, and a request for transaction number including information to identify the shop (merchant), which is inputted buy a clerk (step S3). Upon receipt of the request sent from POS terminal, Payment gateway 15 stores the transaction information included in the request into Transaction table 154b and adds a transaction number to the transaction information to send back to POS terminal 11 via Communication network 10 (step S4).

Further, Payment gateway 15 sends an e-mail including commands for direction of payment to Portable device 14 indicated by the user ID included in the request (step S5). Upon receipt of the e-mail sent from Payment gateway 15 via Mobile communication system 12, Portable device 14 executes an application for payment according to the commands included in the e-mail.

Specifically, the authentication result and the device ID both stored in UIM 18 are transmitted to Payment gateway 15 via Mobile communication network 12, to make a request for proceeding payment processing (step S6). Therefore, the user need not do complicated procedures for payment, for example inputting information on the transaction which is often bothersome for a user. In this system a request for proceeding payment processing is sent to Payment gateway 15 automatically after completion of the authenticity.

Upon receipt of the authentication result and the request including the device ID both sent from Portable device 14 via Mobile communication network 12, Payment gateway 15 confirms authenticity of the user through the result. Next, Payment gateway 15 authenticates the Portable device 14 by checking the device ID (step S7). Specifically, Payment gateway 15 checks the device ID sent from Portable device 14 against a device ID stored correspondingly to the user ID in User table 154a. If the two IDs coincide, authenticity of Portable device 14 is established. Otherwise Payment Gateway 15 stops payment processing.

If the authenticity of Portable device 14 is established, Payment gateway 15 sends to Portable device 14 via Mobile communication network 12 transaction details including name of goods, quantity, and price and information on possible payment methods (step S8). Upon receipt of a payment method and a confirmation from Portable device 14 (step S9), Payment gateway 15 retrieves transaction information from Transaction table 154b and a credit card number and its expiration date from User table 154a. Next, Payment gateway 15 sends to Credit server 13 via Payment network 16 a request for credit including information on the merchant and the payment method along with the retrieved transaction information (step S10).

Upon receipt of the request, Credit server 13checks the credit card number and its expiration date, to determine whether to conduct the payment processing. If the credit card number and the expiration date are proper, Credit server 13 carries out payment processing (step S11) and sends a completion report to Payment gateway 15 via Payment network 15 (step S12). This report is transferred from Payment gateway 15 to POS terminal 11 via Communication network 10 and to Portable device 14 via Mobile communication network 12 (step S13 and step S14, respectively). B-2. Operations of portable device

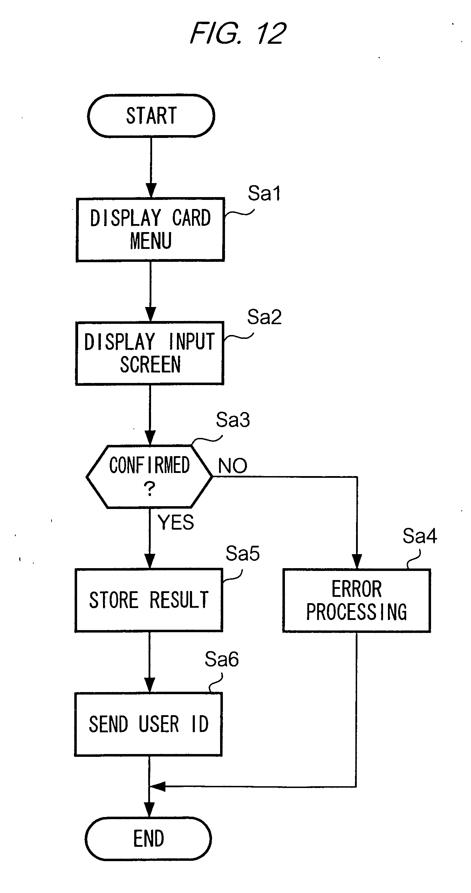

It will now be described that processing carried out by Portable device 14 when a user obtains the electronic payment service. As shown in fig. 12, if a user wants to use the service using his/her Portable device 14 when purchasing goods at a shop, the user inputs with Input device 330 a direction for Portable device to execute an application for payment. Control unit 310 of Portable device 14 displays credit cards available for the user on a display.

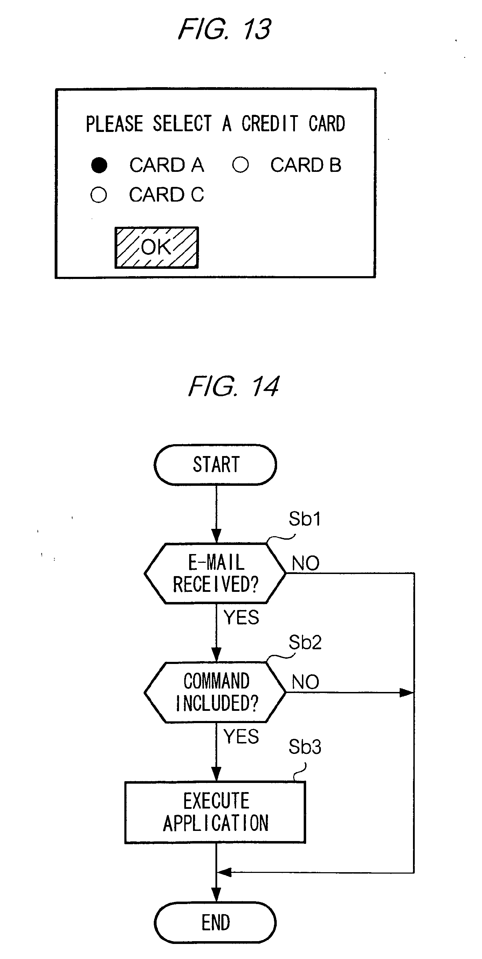

An example of a screen for selection of a credit card displayed on a display of Portable device 14 is shown in fig.13. This screen shows a list of credit cards registered in advance by the user at a provider of the service. When the user operates Input device 330 to select a check box and clicks an "OK" button, a credit card for use in the payment is determined.

After selection of a credit card, Control unit 310 displays an input screen for a user ID and a password on the display. When the user inputs a user ID and a password, Control unit 310 authenticates the user by the inputted used ID and password (step Sa3). Specifically, Control unit 310 compares a user ID and a password each corresponding to the selected credit card stored in Storage area 233 in EEPROM of UIM 18 with the inputted user ID and password. If the two user IDs and two passwords coincide, Control unit 310 confirms authenticity of the user. If not, it confirms inauthenticity. If the authenticity is confirmed (step Sa3 "NO"), Control unit 310 carries out error processing (step Sa4) for example, displays an error message on the display. If the authenticity is confirmed (step S3 "YES"), Control unit 310 stores the authentication result (authenticity) into Storage area 233 (step Sa5) and outputs the user ID stored in Storage area 233 to Radio interface 370 to transmit to Mobile terminal 17 (step Sa6). Then Control unit 310 terminates processing.

It is noted that when storing the authentication result into Storage area 233, Control unit 310 may write an expiration time of the authentication result, which is an hour, for example. After the expiration, Control unit 310 deletes the authentication result.

As a result, a user ID is sent from Portable device 14 to Mobile terminal 17 and subsequently a request for payment is sent from POS terminal to Payment gateway 15 (step S3 in fig.11). Next, an e-mail including commands to execute an application for payment (step S5 in fig.11) is transmitted from Payment gateway 15 to Portable device 14.

It will now be described that operations of Portable device 14 after reception of the e-mail sent from Payment gateway 15 referring to fig.14. Firstly, Control unit 310 checks whether an e-mail is received (step Sb1).

If Portable device 14 receives any e-mails, Control unit 310 terminates processing. If Portable device receives e-mail, Control unit 310 determines whether the e-mail is sent from Payment gateway 15 and checks whether the e-mail contains predetermined commands referring to the content of the e-mail (step Sb2).

If a sender of the e-mail is not Payment gateway 15 or the e-mail does not contain predetermined commands, Control unit 310 terminates the processing. If the sender is Payment gateway 15 and the e-mail contains predetermined commands, Control unit 310 executes an application for payment (step Sb3) before termination.

Control unit 310 repeats the above series of processes periodically so that the application for payment is executed automatically when receiving an e-mail including the commands.

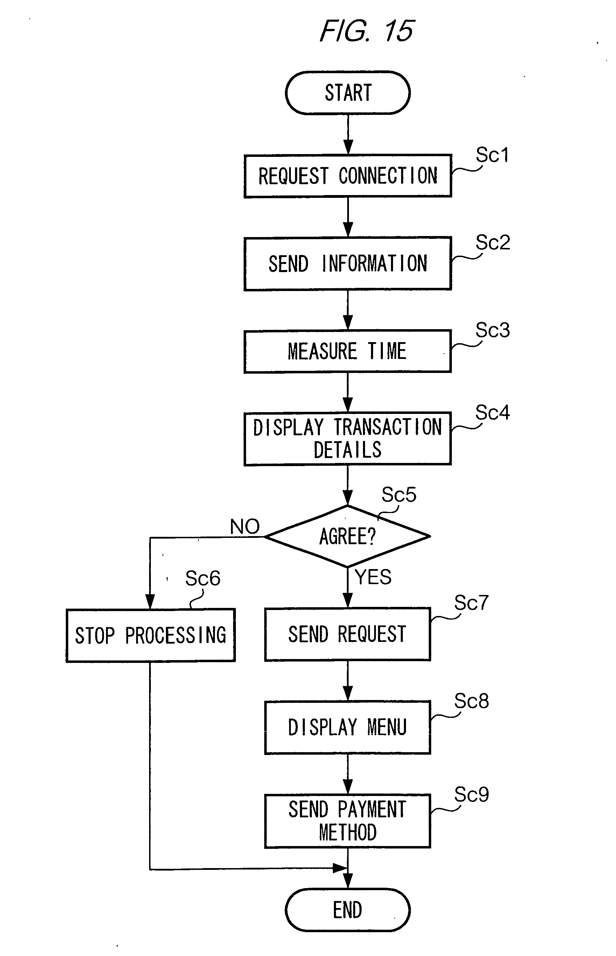

It will now be described that operations of Portables device 14 after execution of the application referring to fig. 15.

Firstly, Control unit 310 reads out from Storage area 233 an address such as Uniform Resource Locator (URL), to access Payment gateway 15 via Mobile communication network 12 (step Sc1). To ensure security, Secure Socket Layer (SSL) is used for data exchange between Portable device 14 and Payment gateway 15.

To be more specific, when sending a request for access to Payment gateway 15, Portable device 14 requests transmission of an electronic certificate issued by a Certificate Authority (CA) which is not shown in the figure. In response to the request, Payment gateway 15 sends the certificate to be confirmed by Portable device 14. Therefore, Portable device 14 is able to check authenticity of Payment gateway 15, thereby avoiding a danger of communication with an unauthorized server posing as an authorized server. After confirmation of authenticity of Payment gateway 15, data exchange starts. Needles to say, SSL is applied for such data exchange. Since SSL has become a common technique, detailed description is omitted.

After establishment of the connection between Portable device 14 and Payment gateway 15, Portable device 14 retrieves an authentication result (authenticity), a user ID, and a device ID from Storage area 233. Next, Portable device 14 transmits a request for authentication of the device 14 to Payment gateway 15 via Mobile communication network 12 to request including the retrieved user ID and device ID (step Sc2). At the same time, Control unit 310 measures time (step Sc3). If Portable device 14 does not receive information from Payment gateway 15 in response to the transmission after predetermined time (two minutes, for example), Control unit 310 terminates this processing and performs timeout processing, for example, displaying a message notifying to a user that this payment processing is aborted and must be carried out from the beginning.

As described before, when Portable device 14 sends an authentication result, a user ID, and a device ID to Payment gateway 15, Payment gateway 15 authenticates confirms the authenticity of the user and device 14. If the authenticity is confirmed, detailed transaction information is sent to Portable device (step S7 and step S8 of fig.11).

When authenticity is confirmed and thus information on transaction details (name of goods, quantity, price, tax, merchant, for example) is transmitted from Payment gateway 15, Control unit 310 displays the transaction details on the display (step Sc4) to be checked by the user.

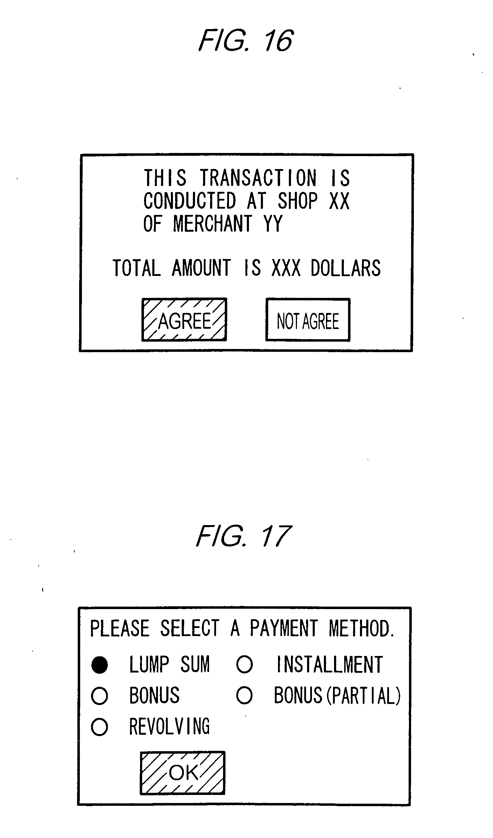

Fig.16 shows an example of a screen on which the transaction details is displayed. As shown therein, a name of merchant (shop), a total amount to be paid by the user, and buttons for direction. A user selects one of the buttons of " Agree" and "Not agree" for proceeding or stop paying, respectively. Control unit 310 determines which buttons is selected, in other words, whether the user agrees with this transaction (step Sc5).

If "Not agree" is selected (step Sc5 "NO"), Control unit 310 stops payment processing (step Sc6). If "Agree" is selected (step Sc5 "YES"), Control unit 310 transmits request for proceeding payment to Payment gateway 15 via Mobile communication network 12 (step Sc7).

In response to the request for proceeding payment, information on payment methods is transmitted from Payment gateway 15 via Mobile communication network 12, (step Sc9 in fig.11). Upon receipt of the information on payment methods, Control unit 310 displays a list of available payment methods on the display (step Sc8), one of which is to be selected by the user. Fig.17 shows an example of a screen on which the list is displayed. As shown therein, check-boxes each corresponding to each payment method are displayed. A user selects a check-box and "OK" button, to determine a payment method the user would like.

After the determination, Control unit 310 transmits to Payment gateway 15 via Mobile communication network 12 information for identifying the determined payment method (step Sc9). Upon receipt of the information of payment method, Payment gateway 15 sends a request for credit to Credit server 13. Subsequently, Payment gateway 15 sends a completion message to Portable device 14. Upon receipt of the message, Control unit 310 displays a massage such as " Payment has now been completed." on the display.

### B-3. Operations of POS terminal 11

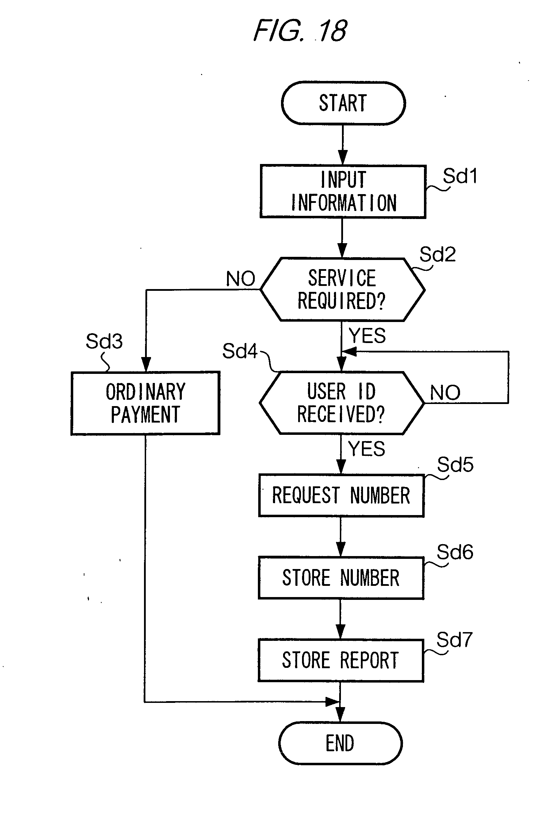

It will now be described that operations carried out in POS terminal 11 referring to fig. 18. When a user conducts a financial transaction namely, buys goods at a shop, a clerk inputs transaction information including name of goods, quantity, price, and tax into POS terminal (step Sd1) to store the information into storage areas. Control unit then 710 determines whether a user wants to use this electronic payment service (step Sd2).

If the user doe not want to use this service, or the user pays in cash (step Sd2 "NO"), Control unit 710 performs processing similarly to a general POS terminal (step Sd3). If the user wants to use the service, in other words, the user inputs a request of this service to POS terminal, Control unit 710 accesses Mobile terminal 17 via Interface 740, to determine whether a user ID is received (step Sd4).

If Mobile terminal 17 has not yet received a user ID sent from Portable device 14 using a short-range radio communication, Control unit 710 repeat accessing periodically until Mobile terminal 17 receives a user ID. When Mobile terminal 17 has received a user ID, Control unit 710 obtains the user ID via Interface 740. Next, Control unit sends to Payment gateway 15 via Communication network 10 a request for transaction number including the transaction information, the merchant information, and the user ID (step Sd5).

Transaction number is transmitted from Payment gateway 15 to POS terminal 11, in response to the request (step S4 in fig.11). Upon receipt of the transaction number from Payment gateway 15, Control unit 710 stores the received transition number in relation with the transaction information stored in POS terminal earlier (step Sd6).

After that, Control unit 710 waits for a completion message sent from Payment gateway 15. When receiving a completion message after data exchange between Portable device 14 and Payment gateway 15, Control unit 710 stores the completion message in relation with the transaction information and transaction number (step Sd7) and finally prints out a receipt for the transaction.

### B-4. Operations of Payment gateway 15

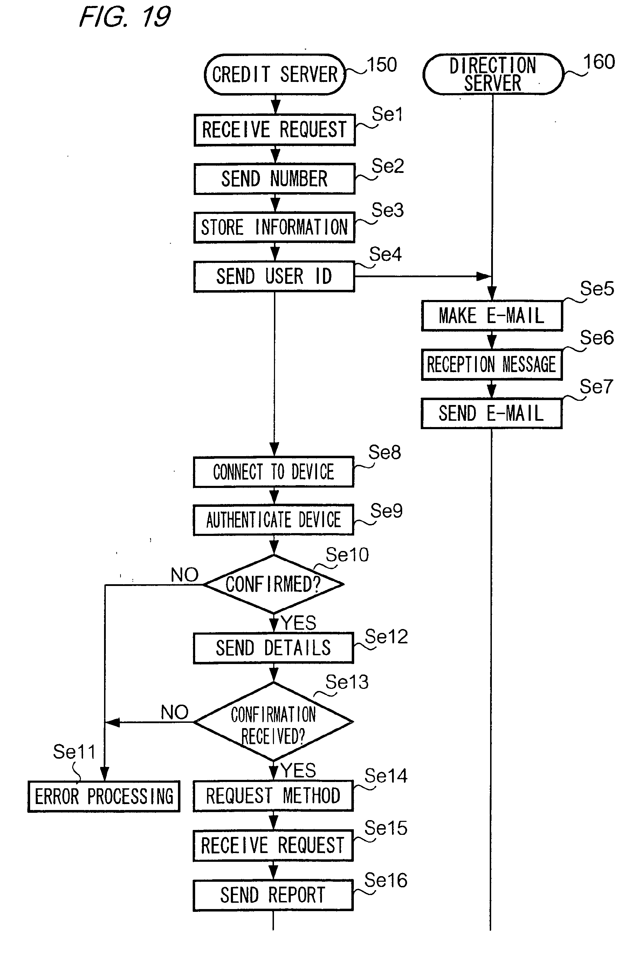

It will now be described that operations performed in Payment gateway15 referring to fig. 19. Upon receipt of a request for transaction number from POS terminal 11(step Se1), CPU 151 of Payment server 150 issues a transaction number and sends it to POS terminal 11 via Communication network 10 (step Se2). CPU 151 stores the transaction information, the merchant information, the transaction number, and the date and time included in the request for transaction number into Transaction table 154b (step Se3).

Next, CPU 151 sends the user ID included in the request for transaction number to Direction server 160 (step Se4). Upon receipt of the user ID sent from Payment server 150, CPU 161 of Direction server 160 generates and stores into a mailbox 164a of the user an e-mail including commands for execution of an application for proceeding payment processing stored and executed in Portable device 14 (step Se5). Next, CPU 161 sends a reception message to Portable device 14 identified by the user ID. When Portable device 14 sends, in response to the message, a request for the e-mail to Direction server 160, CPU 161 sends the e-mail to Portable device 14 (step Se7).

Upon receipt of the e-mail, Portable device 14 executes the application to make a request for connection with Payment server. CPU151 establishes a connection by using SSL (step Se8). After establishment of the connection, Portable device 14 sends the User ID, authentication result (authenticity of the user), and the device ID to Payment server 150. Payment server 150 checks the authentication result and next authenticates Portable device 14 on the basis of the device ID (step Se9). Specifically, CPU 151 compares the device ID sent from Portable device 14 with a device ID stored in relation with the user ID in User table 154a. If the two device IDs coincide, CPU 151 determines authenticity of the device 14 (step Se10).

If authenticity of the device 14 is not confirmed, namely, the two device IDs do not coincide, CPU 151 sends an error message to Portable device 14 and carries out error processing, for example, stops processing (step Se11). If the authenticity is confirmed, CPU 151 reads out information including transaction details and merchant information stored in Transaction table 154b in step Se3, to send to Portable device 14 via Mobile communication network 12 (step Se12).

Upon receipt of the above information, Portable device 14 urges the user to confirm the transaction details (step Sc4 and Sc5 in fig.15). If the user agrees with the transaction, a confirmation is transmitted to Payment gateway 15. If the user does not agree, nothing is transmitted. CPU 151 determines whether the confirmation is received within a predetermined time from transmission of the information to Portable device 14 (step Se13). If the confirmation is not received within the time, CPU 151 carries out error processing, for example, stops processing (step Se11).

If the confirmation is received within the time, CPU 151 determines payment methods available for the transaction and sends information on the payment methods to Portable device 14 via Communication network 12 so that the user can select one among the methods (step Se14). Specifically, CPU 151 refers to User table 154a of fig.7 to specify a credit card number corresponding to the user ID sent from Portable device 14. When the card number is specified, CPU151 refers to Issuer table 154c shown in fig.9 to specify an issuer of the card.

More specifically, CPU 151 determines within which range the card number lies in 154ca to specify the company. After the company is specified, CPU 151 refers to Merchant table 154d (cf. fig.10), to determine payment methods on the basis of the company and the merchant information included in the request for transaction number sent from POS terminal 11. Suppose that Merchant table 154d shown in fig.10 is stored in HDD 154, that a company "A" whose code number is "2a11111", and that a merchant "A" whose code number is "1111111111". CPU would determine that the user can pay in lump sum, installments, and revolving system and cannot pay with bonus and partially with bonus.

After transmission of the payment methods to Portable device 14, Portable device 14 sends a payment method to Payment gateway 15. Upon receipt of the payment method, CPU 151 make a request for credit with data in a predetermined format containing the credit card number, the expiration date, the transaction details (name of goods, quantity, price), the merchant information, the payment method, and other related information, to transmit to Credit server 13 via Payment network 16 (step Se15). It is possible that the predetermined format is conventional one used for data exchange between a conventional credit server and a payment device. Finally, CPU 151 terminates processing of the transaction.

After transmission of the request for credit, CPU 151 waits until a completion message notifying a completion of credit sent from Credit server 13 is received. Upon receipt of the completion message, CPU 151 forwards the completion message to POS terminal via Communication network 10 and to Portable device 14 via Mobile communication network 12 (step Se16).

As described above, by using the electronic financial transaction service in which a method for electronic payment based on this embodiment is applied, a purchaser don't have to hand his/her credit card in payment to a third-party including a clerk. Furthermore, a purchaser doesn't have to carry a credit card for shopping. Therefore, the danger of card information leakage and possible abuse of cards decreases drastically.

Also, Portable device 14 authenticates a user at payment, if a third party or other improper person obtains Portable device 14 improperly, the person cannot pay on credit using Portable device 14, thereby preventing the danger of abuse of Portable device 14.

Since information necessary for payment including a card number and an expiration date is stored in Payment gateway 15, not in Portable device14 or UIM 18, if Portable device 14 or UIM is stolen or improperly obtained, there is little danger of card information leakage from Portable device 14 or UIM. Further, sensitive information such as a card number and expiration date is managed by Payment gateway 15 and cannot provided to public networks such as Mobile communication network 12 and Communication network 10. Therefore, the danger of wiretapping such sensitive information via a public network is reduced.

In this embodiment, sensitive information necessary for payment is stored in both Portable device 14 and detachable UIM 18. Thus, a user is able to detach UIM from Portable device 14 when it is not required, to prevent the danger of information leakage. Even if such information is leaked, an improper user cannot pay using the device 14 since Payment gateway 15 authenticates Portable device 14 as well a user. In other words, both a user and a portable device are checked.

In this embodiment, Portable device 14 sends a request for payment to Payment gateway 15 via POS terminal 11; and upon receipt of the request, Payment gateway 15 sends an e-mail to Portable device 14 to obtain a confirmation of transaction from the user. Thus, even if an improper person obtains a user ID and intends to pay using another portable device in combination with the obtained user ID, needless to say, it is the only authorized Portable device 14 that receives the e-mail. Therefore, the improper person does not receive the e-mail and thus is not able to conduct a transaction using the obtained user ID. Namely, the danger of leakage and abuse of a user ID is restricted.

In the prior art, Payment gateway 15 may sends to Portable device 14 an e-mail including a message like "Please connect with the Payment server for payment", to obtain an instruction of payment from the user. Namely, a user operates Portable device 14 one after another referring to messages. However, in this way, it is often the case that a user forgets operation procedures, or carries out wrong operations. This will cause a problem that a transaction stops or remains uncompleted. On the other hand, in this embodiment, Portable device14 "automatically" executes an application for payment according to commands included in the received e-mail, thereby preventing suspension or stop of payment due to a misoperation made by a user.

Further, a user is able to register a plurality of credit cards used for the electronic financial transaction service. Specifically, each password is stored in UIM correspondingly to each credit card. As a result, a user is able to select credit cards for use in its appropriate way by inputting each user ID, for example.

It is noted that a method for payment based on the present embodiment has advantages in a merchant as well in a user described. That is, although a request for transaction number sent from POS terminal 11 to Payment gateway 15 does not contain a card number and expiration date which are send from a POS terminal 1 to a credit server 4 as shown in fig.21 in a conventional system, Payment gateway 15 does contain transaction details and a merchant information used in a conventional system. Therefore, a merchant can participate in this transaction service simply by making, at POS terminal 11, a data including information necessary for a transaction in a conventional format and sending it to Payment gateway 15. This provides benefits to a merchant because the merchant does not have to install a new POS terminal.

Further, Credit server 13 performs processing in the conventional way because Payment gateway sends a request for credit in a conventional format to Credit sever 13. This provides convenience to a credit company because the company does not have to install a new server.

Since Transaction table 154b stores transaction details conducted by a user, it is possible that Payment gateway collectively manages electronic records on payments (so called electronic receipt). In a conventional credit payment system, generally, a merchant issues a payment voucher on which transaction details are entered and mails it to a depository for managing payment vouchers provided by an issuer. However in this embodiment, Payment gateway 15 is able to manage payment information collectively, thus the cost of issuing and managing payment vouchers can be reduced.

### C. Modification of the first embodiment

The present invention is susceptible to many modifications as follows.

In the above embodiment, Storage area 233 of UIM 18 stores a device ID for identifying Portable device 14 used for the electronic financial transaction service. Portable device14 transmits the device ID to Payment gateway 15 and Payment gateway 15 compares the transmitted device ID and a device ID stored in User table 154a for authentication of the device 14. However, it is possible that the authentication is carried out using SSL, for example. In this case, Portable device 14 sends to Payment gateway 15 a digital certificate for client authentication which has been registered at Certificate Authority (CA). Payment gateway 15 authenticates a device using the certificate.

In the above embodiment, Portable device 14 urges a user to input a user ID and a password for a user authentication. However, it is possible to use biometrics such as fingerprint, iris scan, or combined voice and face patterns for the authentication.

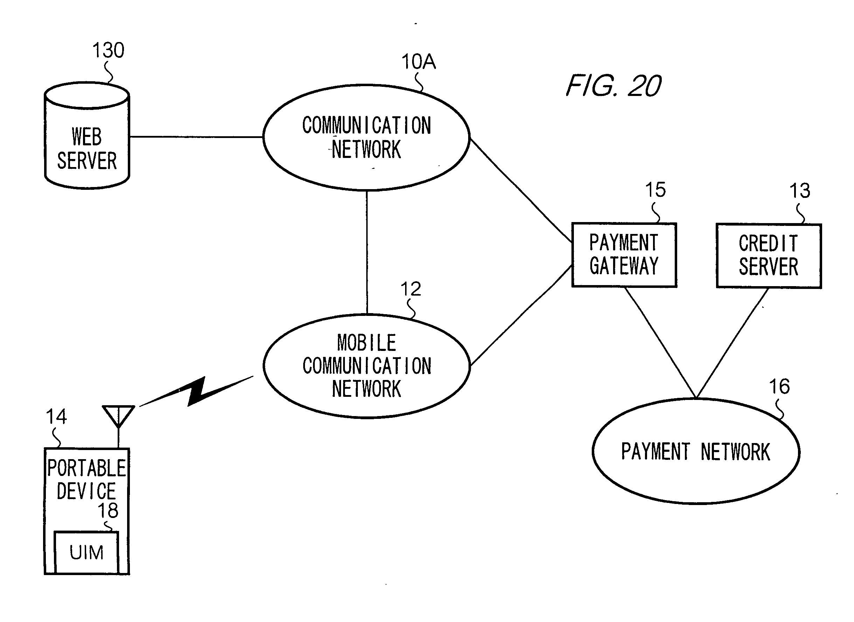

In the above embodiment, a user ID is transmitted to POS terminal 11 via Mobile terminal 17 when the user conducts a financial transaction at a shop. However, the present invention is not only applied to such an actual shop but can be applied to an online shopping via Internet, for example. An example of such applications is shown in fig.20 in which a Web server 130 is provided instead of POS terminal 11 and Mobile terminal 17.

Web server 130, so called an online shop server, receives a request for purchase from terminals including a personal computer and a mobile phone with features of Web browsing. To be more specific, when user selects or inputs a URL for connection with the Web server 130, a web page for selection of goods is displayed on the terminal. The user makes a request for purchase seeing the page and sends it to Web server 130. A method of the present invention can be applied to procedures used for such a system for payment.

Specifically, firstly Portable device14 authenticates a user. If authenticity is confirmed, a user ID is transmitted from Portable device 14 to Web server 130 via Mobile communication network 12 and a Communication network 10A. Upon receipt of the user ID, Web server 130, instead of POS terminal 11, sends a request for transaction number including transaction information, the user ID, and merchant information. Next, payment processing is performed among Portable device 14, Payment gateway 15, and Credit server 13 similarly to the first embodiment. After completion of the payment processing, a completion message is sent from Payment gateway 15 to Web server 130 via Communication network 10A.

In the first embodiment, transaction information conducted by a user is stored in Transaction table 154b. Thus, it is possible that a user checks transaction information of the user with Portable device 14, personal computer, or a mobile phone with features including Web browsing. Specifically, when receiving a request for the check from a terminal via Internet, Payment gateway 15 retrieves the transaction information form table 154b and transforms it into a HTML format for transmission to the terminal.

In the first embodiment, information necessary for payment is stored in EEPROM 230 of detachable UIM 18 to be read out by Control unit 310. However, it is possible that a memory such as an EEPROM incorporated into Portable device 14 stores such information instead of UIM 18.

Further, a module such as an IC chip having high resistance to tampering in which information for payment including a user ID and a password is stored and read out by Control unit can be used instead of UIM 18. Needless to say, such a module can be mounted detachably.

In the first embodiment, a purchaser uses Portable device capable of communicating with Payment gateway by radio via Mobile communication network 12 for electronic payment. However, a personal computer can be used as a terminal for payment in the system, for example. Specifically, such a computer is connected with Internet via a fix telephone network and has an input device, display, and other devices necessary for the electronic payment.

In the first embodiment, a user ID is transmitted via Mobile terminal 17 to POS terminal 11. However, if POS terminal 11 features Bluetooth for data exchange, Portable device 14 may transmit directly to POS terminal 11. It is possible that a user ID can be transmitted from Portable device 14 to POS terminal 11 using other commutation methods.

In the first embodiment, data exchange is carried out between POS terminal 11 and Payment gateway 15 via Communication network 10. It is possible that Mobile terminal 17 is connected with Communication network 10 to exchange data between POS terminal 11 and Payment gateway via Mobile terminal 17 and Communication network 10.

In the first embodiment it is possible that if a user uses two or more credit cards for the electronic transaction system, a user ID or a password is assigned to the cards. In this case, before selection of credit card (step Sa1 of fig.12), a user may input the user ID and a password before Portable device 14 authenticates the user. After the authentication, credit cards corresponding to the user ID and the password are displayed. Then the user selects one among the cards.

In the first embodiment, Control unit 310 executes application programs in data exchange between POS terminal and Payment gateway 11 and authentication of a user and a device 14. It is possible that a storage medium such as a CD-ROM or a floppy disk in which such programs for the electronic payment is stored is provided to users. The programs may be provided via Internet.

### (Second embodiment)

A second embodiment of the present invention will now be described referring to the drawings.

### D. Configuration of the system

### D-1. Overall configuration

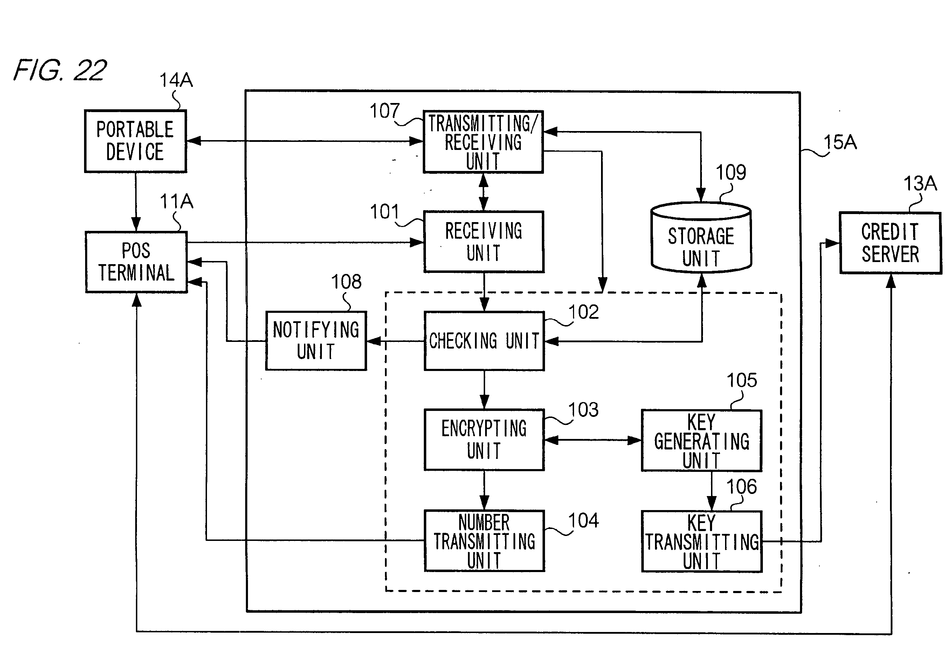

Fig.22 shows an electronic payment system using a method for electronic paying based on the second embodiment of the present invention.

As shown, Electronic payment system 15A has a POS terminal 11A and Credit server 13A. Payment gateway 15A is connected with Terminal 11A and Credit server 13A via a dedicated line (not shown) for data exchange. Terminal 11A and Payment gateway may be connected via a public network. Payment gateway 15A is also connected to Portable device 14A.

### D-2. POS terminal

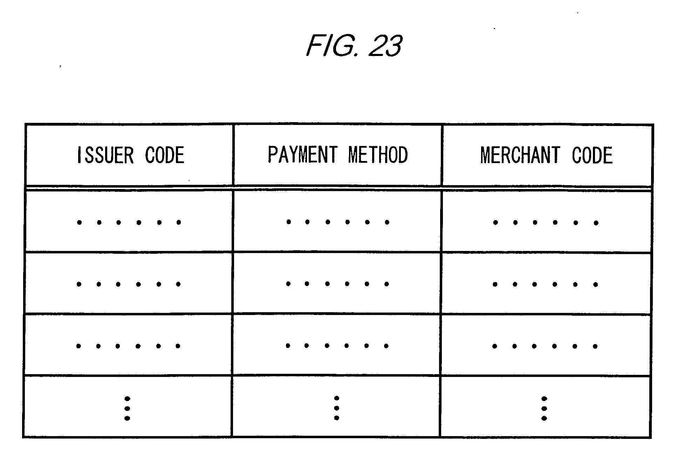

POS terminal 11A has a storage unit such as a hard drive and an input device such as a keyboard, a mouse or a card reader, in addition to Display, Control unit including a CPU, ROM, RAM, and a communication interface same as POS terminal 11 of the first embodiment. Fig.23 shows an example of information stored in the storage. As shown, "issuer code", "payment method", and "merchant code" are stored correspondingly. The "issuer code" identifies an issuer (credit card company) of a credit card by which a user can pay at a shop where POS terminal 11A is installed. The "payment method" is a payment method available for a purchaser at the shop such as a lump sum, installments, or with bonus. The "merchant code" identifies a shop of a merchant.

### D-3. Credit server

Credit server 13A includes a CPU, a RAM, a ROM, an input device such as keyboard or mouse, a display, a storage unit such as a hard drive, and a communication interface such as a modem.

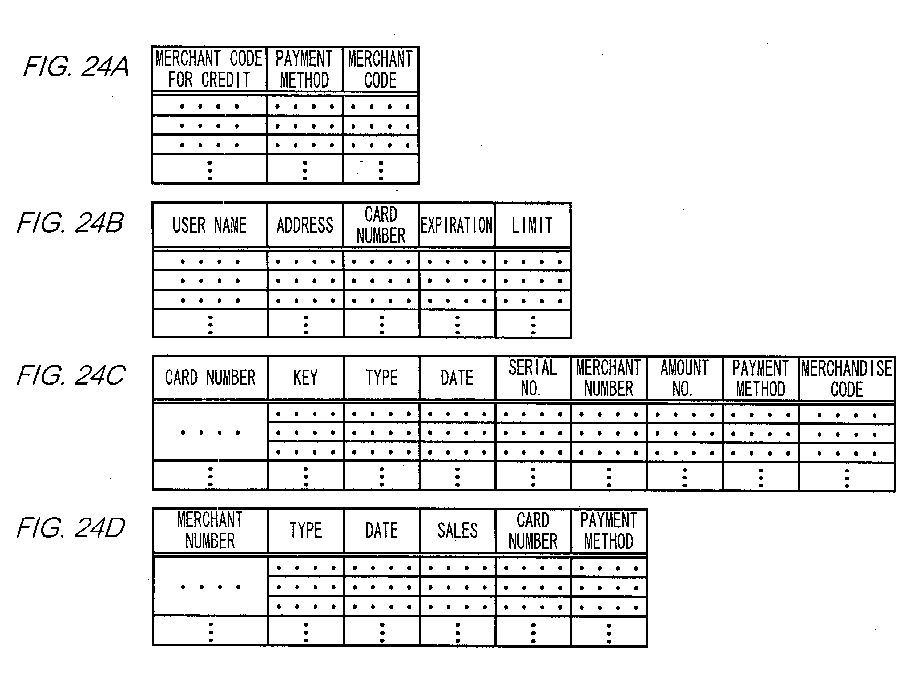

Figs.24A through 24D shows an example of information stored in the storage unit of Credit server 13A. Fig.24A shows information relating to POS terminal 11A. Specifically, "merchant code for credit", "payment method", and "merchant code" are stored correspondingly. The "merchant code for credit" allows an issuer (credit company) to identify a merchant or a shop with which a transaction is conducted. It may be an ID number of a shop or of POS terminal 11A.

Fig.24B shows information relating to users of credit cards. Specifically, "user name", "user address", "card number", " expiration", and "credit limit" are stored correspondingly.

Fig.24C shows an example of histories of transactions conducted by users. " Card number", "decryption key", "type", "date", "transaction number", "merchant number"," amount", "payment method", and " merchandise code" are stored correspondingly. Information stored in "card number" in fig.24C is same as stored in fig.24B. In fig.24C it is permitted that a card number is stored for several times because a user may conduct transactions several time with the card.

The "decryption key" is used for decrypting an encrypted card number which is sent from Payment gateway 15A to POS terminal 11A. The "type" represents types of transactions. The "date" represents date of payment. The " transaction number" is a serial number each assigned to a transaction. The "merchant number" identifies a shop of a merchant with which a transaction is conducted. The "amount" represents a price of merchandise (possibly including tax). The "payment method" represents payment in a lump sum, or installments, for example. The "merchandise code" identifies merchandise transacted.

Fig.24D shows an example of information on transaction details conducted at each shop. Specifically, "merchant number", " type", "date", "sales", "card number", and "payment method" are stored. Information stored in "merchant number", "type", and "date" is same as stored in fig. 24C. The "sales" represents a price of merchandise, which is same as "amount" in fig.24C if tax is not included in the "amount". The "payment method" represents a payment method selected by a user.

### D-4. Portable device

Portable devicel4A is, for example, a cellular phone capable of carrying out data communications. To be more specific, it may use (Personal Digital Cellular (PDC) of Time Division Multiple Access (TDMA), Code Division Multiple Access (CDMA), General Packet Radio Service (GPRS), or any other schemes for data communication. Further, Third generation (3G) scheme such as IMT-2000 may be applied. Needles to say, PDA and other portable devices can be applied.

### D-5. Payment gateway

Payment gateway 15A includes a CPU, a RAM, a ROM, an input device such as a keyboard or a mouse, a display, a storage unit such as a hard drive, and a communication interface such as a modem. Functionally, Payment gateway 15A comprises a receiving unit 101, a checking unit 102, encryption unit 103, a number transmitting unit 104, a key generation unit 105, a key transmitting unit 106, a transmitting/receiving unit 107, a notifying unit 108, and a storage unit 109.

Transaction unit 101 receives a user ID to identify a user assigned to the user in advance and a merchant code to identify a shop, which is sent from POS terminal 11A where the user conducts a transaction. Upon receipt of a user ID and a merchant code, Receiving unit 101 transfers the user ID and the merchant code to Checking unit 102 and Transmitting/receiving unit 107.

Checking unit 102 retrieves a card number of a user from Storage unit 109 on the basis of a user ID received by Receiving unit 101. Specifically, Checking unit 102 retrieves a from Storage unit 109 a card number and an issuer code corresponding to a user ID received by Receiving unit 101. Checking unit 102 outputs the card number, the issuer code, and the merchant code to Encryption unit 103. If the user ID is not found or the expiration date has passed, Checking unit 102 outputs to Notifying unit 108 a message notifying failure of authentication.

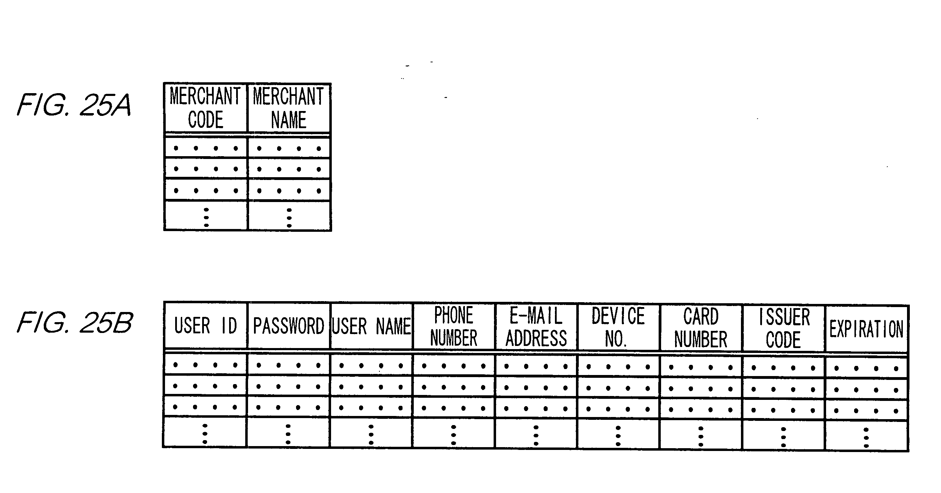

Figs.25A and 25B show an example of information stored in Storage unit 109. As shown in Fig.25A, information relating to shops which participate in the electronic payment service provided by Payment gateway 15A is stored. To be more specific, a merchant codes and corresponding shop name.

Fig.25B shows an example of information relating to users. Specifically, user IDs and corresponding passwords, user names, phone numbers, e-mail addresses, terminal numbers, card numbers, issuer codes, and expirations are stored correspondingly. The password is used for authentication of a user.

The phone number is a telephone number of portable device 14A. The e-mail address is an e-mail address for Portable device 14A. The device number is, for example, a serial number assigned for each Mobile station 14A, which identifies Mobile station 14A. The card number is a number of a credit card by which a user pays. A user registers the card number to Payment gateway 15A in advance. The issuer code identifies an issuer of a card (credit company). The expiration represents an expiration date of the credit card.

Encryption unit 103 encrypts a card number obtained by Checking unit 102, to generate a "encrypted card number". Specifically, Checking unit 103 encrypts a card number, in a way that it can be decrypted using an encryption key generated by Key generating unit 105. Suppose that the decryption key is "0123", that the card number is "3456", and that the encryption calculation is an addition, the encrypted card number becomes "3579". In decryption, "0123" is subtracted from "3579" to be generated the card number "3456". Encryption unit 103 outputs to Key generating unit 105 a card number, its encrypted card number, and an issuer code. Further, Encryption unit 103 outputs to Number transmitting unit 104 the encrypted card number and the merchant code.

Number transmitting unit 104 transmits an encrypted card number made by Encryption unit 103 to POS terminal 11A specified by the merchant code obtained from Encryption unit 103.

Key generating unit 105 generates a decryption key used for decryption of a card number. In this embodiment, a card number is encrypted by Encryption unit 103 using a decryption key. It is possible that the decryption key is generated using both the decryption key and the card number. Key generating unit 105 outputs to Key transmitting unit 106 the encrypted card umber, the decryption key, and the issuer code.

Key transmitting unit 106 transmits to Credit server 13A an encrypted key generated by Key generating unit 105. Specifically, Key transmitting unit 106 transmits, to Credit server by a credit company specified by the issuer code provided form Key generating unit 105, the encrypted card number and the decryption key.

When Receiving unit 101 receives a user ID, Transmitting/receiving unit 107 transmits to portable device 14A a confirmation e-mail including transaction details. If Portable device 14A does not reply to the e-mail, Transmitting/receiving unit 107 stops at least one of Checking unit 102, Encryption unit 103, Number transmitting unit 104, Key generating unit 105, and Key transmitting unit 106, to cancel the transaction conducted on the basis of the user ID.

To be more specific, Transmitting/receiving unit 107 retrieves from Storage unit 109 an e-mail address on the basis of the user ID provided from Receiving unit 101. Transmitting/receiving unit 107 then transmits a confirmation e-mail including transaction details to Portable device 14A specified by the e-mail address. Upon receipt of a reply e-mail from Portable device 14A, Transmitting/receiving unit 107 checks a password included in the reply e-mail against a password stored in Storage unit 109, to authenticate the user.

If Transmitting/receiving unit 107 does not receive a reply e-mail or the both passwords does not agree, Transmitting/receiving unit 107 stops at least one of Checking unit 102, Encryption unit 103, Number transmitting unit 104, Key generating unit 105, and Key transmitting unit 106, to cancel the transaction conducted on the basis of the user ID. A method for obtaining a confirmation from a user is not limited to the e-mail. For example, Transmitting/receiving unit 107 can transmit to Portable device14A a reception message which is generally used for cellular phone. It is possible that, in the authentication of a user, Transmitting/receiving unit 107 uses, in addition to a password, information to identify Portable device 14A uniquely such as a device ID.

If Checking unit 102 does not find the credit card corresponding to the user ID in Storage unit 109, Notifying unit 108 notifies POS terminal 11A of failure of authentication.

### E. Operations of the system

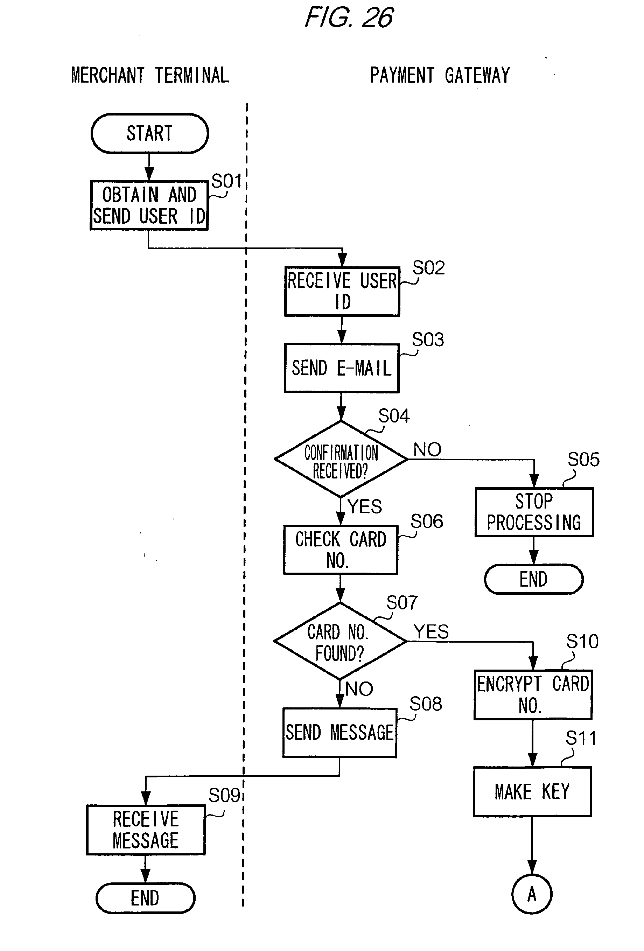

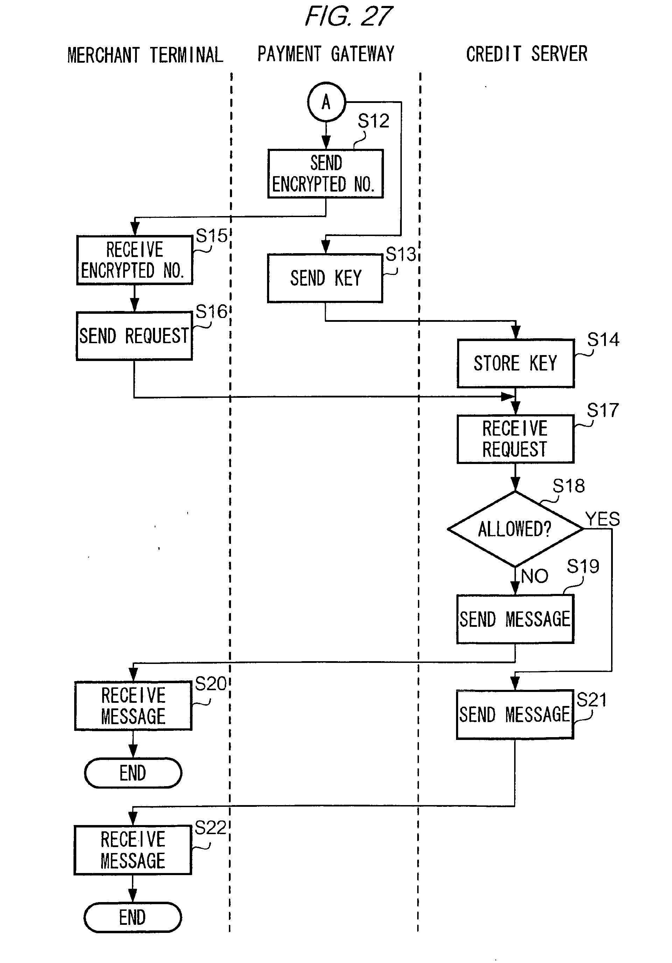

Detailed procedures for payment processing in an electronic financial transaction system based on the second embodiment will now be described referring to figs. 26 and 27.

As shown in fig.26, firstly, POS terminal 11A obtains a user ID from a user and transmits the user ID and a merchant code to Payment gateway 15A (step S01). Specifically, a user inputs a user ID with the input device of POS terminal, for example. POS terminal 11A may obtain the user ID from Portable device 14A. Receiving unit 101 receives the user ID and the merchant code (step S02). Next, Receiving unit 101forwards the user ID and the merchant code to Checking unit 102 and Transmitting/receiving unit 107.

Upon receipt of the user ID, Transmitting/receiving unit 107 sends a confirmation e-mail to Portable device 14A corresponding to the user ID (step S03). After the sending, Transmitting/receiving unit 107 is ready for receiving reply e-mail (step S04). If Transmitting/receiving unit 107 does not receive a reply e-mail or the both passwords does not agree, Transmitting/receiving unit 107 stops at least one of Checking unit 102, Encryption unit 103, Number transmitting unit 104, Key generating unit 105, and Key transmitting unit 106, to cancel the transaction conducted on the basis of the user ID (step S05).

When Transmitting/receiving unit 107 receives the reply e-mail, Checking unit 102 retrieves from Storage unit 109 a card number stored correspondingly to the user ID provided from Receiving unit 101 (step S06). It is noted that steps S03 and S04 can be omitted.

Checking unit 102 checks the card number retrieved from Storage unit 109 against the card number provided from Receiving unit 101 (step S07). If the user ID is not found in Storage unit 109 or the expiration date has passed, Checking unit 102 notifies Notifying unit 108 of failure of authentication.

Upon receipt of the message from send from Checking unit 102, Notifying unit 108 sends a message notifying POS terminal of failure of authentication (step S08). POS terminal 11A receives the message to be notified the user (step S09).

If the credit card number corresponding to the user ID is retrieved form Storage unit 109 in step S07, Checking 102 outputs the card number, the issuer code, and the merchant code to Encryption unit 103. When Encryption unit 103 receives the card number, the issuer code, and the merchant code, Key generating unit 105 generates a decryption key used for decryption of an encrypted card number (step S10). Key generating unit 105 outputs the key to Encryption unit 103 to obtain the card number and the issuer code. Next, Key generating unit 105 sends to Key transmitting unit 106 the card number and the issuer code along with the key.

Upon receipt of the decryption key from Key generating unit 105, Encryption unit 103 encrypts the card number in a way that the encrypted card number is decrypted with the decryption key (step S11). Next, Encryption unit 103 outputs the encrypted card number and the merchant code to Number transmitting unit 104.

Referring to fig.27, Number transmitting unit 104 transmits the encrypted card number to POS terminal 11A indicated by the merchant code (step S12). Key transmitting unit 106 transmits the encrypted card number and the key to Credit server 13A indicated by the issuer code (step S13). The encryption key may be generated for each user, or for each credit company. In case a common key is used as the decryption key for this system, Key transmitting unit 106 does not necessarily transmit the key to Credit server 13A more than twice. But needless to say, when the key is updated, Key transmitting unit 106 transmits the updated key. Upon receipt of the encrypted card number and the decryption key, Credit server 13A stores the number and the key into a storage unit of Credit server 13A (step S14).

POS terminal 11A receives and stores into a storage unit of POS terminal 11A the encrypted card number (step S15). Next, POS terminal 11A makes a request for credit to transmit to Credit server 13A (step S16). Specifically, the request includes, a type, date, transaction number, merchant code for credit, amount, payment method, merchant code as described above, in addition to the encrypted card number.

Upon receipt of the request (step S17), Credit server 13A determines whether the request is accepted referring to the encrypted card number (step S18). Specifically, Credit server 13A checks the encrypted card number and the decryption key which has already been transmitted by Payment gateway 15A against the decryption key transmitted by POS terminal 11A. If both keys coincide, Credit server 13A decrypts the encrypted card number using corresponding decryption key which has already been received from Payment gateway 15A. If the encrypted card number is not found, Credit server 13A sends a message notifying a failure of authentication to POS terminal 11A to be provided to the user (step S19). POS terminal 11A receives the message (step S20). If the encrypted card number is found, Credit server 13A sends an allowance message (step S21). POS terminal 11A receives the message to be provided to the user.

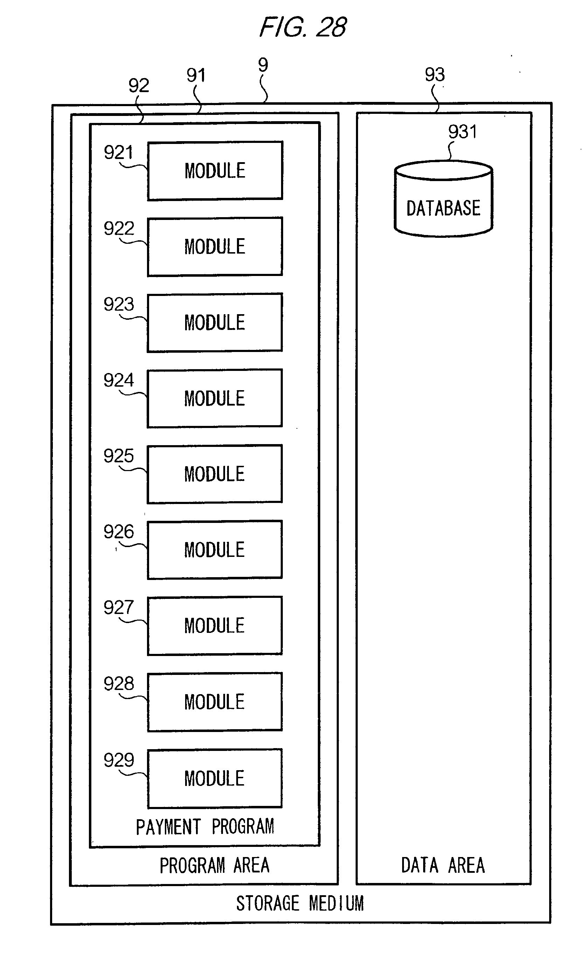

A payment program 92 for making a computer to function as Payment gateway 15A and a storage medium 9 will now be described referring to fig.28. Fig.28 shows a functional structure of the storage medium. Storage media 9 is, for example, a magnetic disk, an optical disk including a CR-ROM, or a semiconductor memory.

As shown in fig.9, Storage medium 9 has a program area 91 and a data area 93. Data area stores a database 931 same as Storage unit 109 shown in fig.22.

Program area 91 stores Payment program 92. Payment program 92 includes a main module 921 for controlling the following modules, a module 922 for receiving transaction information, a module 923 for checking a card number, a module 924 for encrypting a card number, a module 925 for transmitting an encrypted card number, a module 926 for generating a decryption key, a module 927 for transmitting a decryption key, a module 928 for transmitting a confirmation message and receiving a reply message, and a module 929 for notifying a message of failure of authentication. These modules 922 through 929 have same functions as the Receiving unit 101, Checking unit 102, Encryption unit 103, Number transmitting unit 104, Key generating unit 105, Key transmitting unit 106, Transmitting/receiving unit 107, Notifying unit 108, respectively.

In the second embodiment, since the encrypted card number is transmitted from Payment gateway to POS terminal 11A and the encrypted card number is generated by Payment gateway 15A on the basis of a user ID transmitted from POS terminal, a merchant cannot obtain a card number. Therefore, security of transaction is ensured in this system. In other words, a user is able to send a card number safely to Payment gateway 15A to conduct a transaction. Payment gateway transmits a decryption key to Credit server 13A, thus Credit server 13A obtains a decryption key corresponding to the encrypted card number. Therefore, Credit server 13A is able to determine whether a request for credit should be accepted using an encrypted card number and corresponding decryption key. Furthermore, an encrypted card number is generated each time a transaction is conducted, thus a merchant can manage sales at the shop, not knowing a card number.

In this embodiment, when Payment gateway 15A does not receive a reply mail from Portable device 14A, payment processing related to the user ID is stopped. Therefore, if an authorized person obtains a user ID improperly, the person cannot conduct any transactions using the user ID.

If Payment gateway 102 cannot find a card number corresponding to a user ID, Payment gateway 102 transmits a message notifying failure of authentication to POS terminal 11A, thus a merchant and a user can recognize that the card is not available for the transaction.

## Claims

1. An electronic payment method comprising the steps of:
authenticating a user of a user terminal on the basis of user identification information inputted to said user terminal by said user, by said user terminal;
storing an authentication result of said user, by said user terminal, when said user terminal confirms authenticity of said user;
transmitting a user identification information stored beforehand in said user terminal to a merchant terminal when said user terminal confirms authenticity of said user, by said user terminal;
transmitting to payment device via a first communication network said user identification information and transaction information transmitted from said user terminal, by said merchant terminal;
receiving said user identification information and said transaction information transmitted from said merchant terminal, by said payment device;
identifying said user terminal on the basis of said user identification information and transmitting commands for instructing transmission of said authentication result to said user terminal via a second communication network;
transmitting authenticity of said user to said payment device via said second communication network if said user terminal stores authenticity of said user, by said user terminal; and
performing payment processing on the basis of said transaction information upon receipt of said authenticity from said user terminal, by said payment device.

2. The method of claim 1, further comprising the steps of:
transmitting said transaction information to said user terminal via said second communication network upon receipt of said authenticity of said user from said user terminal, by said payment device;
receiving said transaction information transmitted from said payment device and notifying said user of said transaction information, to be checked by said user, by said user terminal; and
when said user inputs an instruction for proceeding payment processing to said user terminal, transmitting to said payment device a request for proceeding payment processing; and
wherein upon receipt of said request, said payment device performs payment processing on the basis of said transaction information.

3. The method of claim 1, wherein said user terminal transmits to said payment device terminal identification information for identifying said user terminal along with said authentication result;
said payment device authenticates said user terminal referring to said terminal identification information; and
when authenticity of said user terminal is confirmed, said payment device performs payment processing on the basis of said transaction information.

4. The method of claim 1, wherein said second communication network is a mobile communication network and said user terminal is a mobile station.

5. The method of claim 1, wherein upon receipt of said authenticity from said user terminal, said payment device retrieves a card number and an expiration date on the basis of said user identification information and sends a request for credit including the card number and the expiration date to a credit server provided by a credit company.

6. An electronic payment method comprising the steps of:
authenticating a user of a user terminal on the basis of user identification information inputted to said user terminal by said user, by said user terminal;
transmitting user identification information for identifying a user to a merchant terminal, by said user terminal, when said user terminal confirms authenticity of said user;
transmitting to a payment device via a first commutation network said user identification information transmitted from said user terminal, by said merchant terminal;
receiving said user identification information from said merchant terminal, by said payment device;
identifying said user terminal referring to received user identification information and transmitting commands for executing an application for payment stored in said user terminal to identified user terminal via a second communication network, by said payment device;
upon receipt of said commands, executing said application to transmit a request for proceeding payment processing to said payment device via said second communication network, by said user; and
upon receipt of said request from said user terminal, performing a payment processing.

7. An electronic payment system having a payment device, a merchant terminal connected with said payment device via a first communication network, and a user terminal connected with said payment device via a second communication network **characterized in that**:
said user terminal authenticates a user of said user terminal on the basis of user identification information inputted to said user terminal by said user; if authenticity of said user is confirmed, stores authentication result; and
transmits to said merchant terminal user identification information stored in said user terminal;
said merchant terminal transmits to said payment device via said first communication network said user identification information transmitted from said user terminal and transaction information;
said payment device identifies said user terminal on the basis of said user identification information transmitted from said merchant terminal and
transmits to said identified user terminal via said second communication network commands for instructing transmission of said authentication result;
said user terminal transmits to said payment device via said second communication network according to said commands transmitted from said payment device when said user terminal stores said authentication result; and
upon receipt of said authentication result from said user terminal, said payment device performs payment processing on the basis of said transaction information.

8. The system of claim 7, wherein after reception of said authentication result from said user terminal, said payment device transmits said transaction information to said user terminal via said second communication network;
said user terminal receives said transaction information form said payment device;
notifies said user of said transaction information to be checked by said user; and
if said user inputs to said user terminal an instruction of proceeding a payment processing, transmits a request for proceeding payment processing to said payment device via said first communication network; and
upon receipt of said request, said payment device performs payment processing.

9. The system of claim 8, wherein said user terminal transmits to said payment device terminal identification information for identifying said user terminal stored in said user terminal along with said authentication result; and
said payment device authenticates said user terminal on the basis of said terminal identification information;
if authenticity of said user terminal is confirmed, performs payment processing on the basis of said transaction information.

10. The system of claim 7, wherein a detachable storage medium for storing said user identification information is mounted to said user terminal; and
when said user terminal confirms authenticity of said user on the basis of said user identification information, said user terminal transmits to said merchant terminal said user identification information stored in said storage medium.

11. The system of claim 7, wherein said second communication network is a mobile communication network and said user terminal is a mobile station.

12. The system of claim 7, wherein when receiving said authentication result from said user terminal, said payment device retrieves a card number and an expiration on the basis of said user identification information and sends a request for credit including said card number and said expiration to a credit server managed by a credit company.

13. An electronic payment system having a payment device, a merchant terminal connected with said payment device via a first communication network, and a user terminal connected with said payment device via a second communication network **characterized in that**:
said user terminal authenticates a user on the basis of said user identification information inputted to said user terminal by said user;
if authenticity of said user is confirmed, transmits to said merchant terminal a user identification information for identifying said user;
said merchant terminal transfers said user identification information to said payment device via said first communication network;
said payment device identifies said user terminal on the basis of said user identification information and transmits to said identified user terminal via said second communication network commands for executing an application for payment stored in the user terminal;
said user terminal executes said application according to said commands and transmits a request for proceeding payment processing to said payment device via said second communication network; and
said payment device performs said payment processing according to said request.

14. A user terminal used for an electronic payment system having a payment device connected with a first and a second communication network and a merchant terminal connected with said payment device via a first communication network, comprising:
an authenticating means for authenticating a user of said communication terminal on the basis of a user identification information inputted to said user terminal by said user;
a storing means for storing an authentication result when authenticity of said user is confirmed by said authenticating means;
a storage medium for storing said user identification information;
a first transmitting means for transmitting, when authenticity of said user is confirmed, said user identification information stored in said storage means to said merchant terminal so that said merchant terminal transmits to said payment device a request for payment processing including said user identification information;
a receiving means for receiving commands for instructing transmission of said authentication result which is transmitted, in response to said request for payment, from said payment device via said second communication network; and
a second transmitting means for transmitting, upon receipt of said commands, a request for proceeding said payment processing including said authentication result to said payment device via said second communication network.

15. The user terminal of claim 14, wherein said storage medium further stores a terminal identification information for identifying said user terminal; and
said second transmitting means transmits, along with said authentication results, said terminal identification information stored in said storage medium to said payment device via said second communication network.

16. The user terminal of claims 14 or 15, wherein said storage medium is mounted detachably to said user terminal; and
said first transmitting means transmits to said merchant terminal said user identification information stored in said storage medium, when authenticity of said user is confirmed by said authenticating means on the basis of said user identification information.

17. The user terminal of claim 14 or 15, wherein said second communication network is a mobile communication network; and
said user terminal further comprises a radio communication means for exchanging data via said mobile communication network.

18. A user terminal used for an electronic payment system having a payment device connected with a first and a second communication network and a merchant terminal connected with said payment device via a first communication network, comprising:
an authenticating means for authenticating a user of said communication terminal on the basis of a user identification information inputted to said user terminal by said user;
a first transmitting means for transmitting, when authenticity of said user is confirmed, said user identification information stored in said storage means to said merchant terminal so that said merchant terminal transmits to said payment device a request for payment processing including said user identification information
a receiving means for receiving commands for executing an application for payment which is transmitted from said payment device via said second communication network; and
a second transmitting means for executing said application for payment stored in said user terminal and transmitting, according to said application, a request for proceeding payment processing to said payment device via said second communication network.

19. A payment device comprising:
a receiver for receiving a request for payment including a user identification information for identifying a user of a user terminal from a merchant terminal via a first communication network;
an identifying means for identifying said user terminal among registered user terminal on the basis of said received user identification information; a transmitter for transmitting to said identified user terminal via a second communication network commands for executing an application for payment stored in the user terminal; and
a processing means for performing a payment processing on the basis of a request sent from the user terminal via said second communication network after transmission of said commands.

20. A computer program product for making a computer incorporated into a communication terminal used for an electronic payment system having a payment device connected with a first and a second communication network and a merchant terminal connected with said payment device via a first communication network to execute the steps of:
authenticating a user of said communication terminal on the basis of a user identification information inputted to said user terminal by said user; storing an authentication result into a storage means when authenticity of said user is confirmed by said authenticating means;
transmitting, when authenticity of said user is confirmed, said user identification information stored in said storage means to said merchant terminal so that said merchant terminal transmits to said payment device a request for payment processing including said user identification information;
receiving commands for instructing transmission of said authentication result which is transmitted, in response to said request for payment, from said payment device via said second communication network; and
transmitting, upon receipt of said commands, a request for proceeding said payment processing including said authentication result to said payment device via said second communication network.

21. A storage medium for storing a computer program product for making a computer incorporated into a communication terminal used for an electronic payment system having a payment device connected with a first and a second communication network and a merchant terminal connected with said payment device via a first communication network to execute the steps of:
authenticating a user of said communication terminal on the basis of a user identification information inputted to said user terminal by said user; storing an authentication result into a storage means when authenticity of said user is confirmed by said authenticating means;
transmitting, when authenticity of said user is confirmed, said user identification information stored in said storage means to said merchant terminal so that said merchant terminal transmits to said payment device a request for payment processing including said user identification information;
receiving commands for instructing transmission of said authentication result which is transmitted, in response to said request for payment, from said payment device via said second communication network; and
transmitting, upon receipt of said commands, a request for proceeding said payment processing including said authentication result to said payment device via said second communication network.

22. A payment device comprising:
a storage unit for storing a user identification information for identifying a user of a user terminal and a card number of a credit card correspondingly; a receiving unit for receiving from a merchant terminal a user identification information;
a retrieving unit for retrieving from said storage unit a card number corresponding to said identified user;
an encrypting unit for encrypting the retrieved card number;
a generating unit for generating a key for decryption of said encrypted card number;
a first transmitting unit for transmitting to said merchant terminal said encrypted card number; and
a second transmitting unit for transmitting said key to a credit server managed by an issuer of the credit card.

23. The payment device of claim 22, further comprising a confirming means for transmitting, when said receiving means receives said user identification, information said receiving unit transaction information to said user terminal and if confirmation of said transaction information form said user terminal is not received, stopping processing performed by any of said a receiving unit, an encrypting unit, a generating unit, a first transmitting unit, and a second transmitting unit, to terminate payment processing corresponding to the user identification information.

24. The payment device of claim 22 or 23, further comprising a notifying means for transmitting to said merchant terminal a rejection message if the card number is not stored in said storage unit.

25. An electronic payment method comprising the steps of:
receiving from a merchant terminal a user identification information for identifying a user of a user terminal, by a receiving unit;
retrieving from a storage unit a card number corresponding to said identified user, by a retrieving unit;
encrypting the retrieved card number, by an encrypting unit;
generating a key for decryption of said encrypted card number, by a generating unit;
transmitting to said merchant terminal said encrypted card number, by a first transmitting unit; and
transmitting said key to a credit server managed by an issuer of the credit card, by a second transmitting unit.

26. The electronic payment method of claim 25, further comprising the step of transmitting, when said receiving means receives said user identification, information said receiving unit transaction information to said user terminal and if confirmation of said transaction information form said user terminal is not received, stopping processing performed by any of said a receiving unit, an encrypting unit, a generating unit, a first transmitting unit, and a second transmitting unit, to terminate payment processing corresponding to the user identification information, by a confirming means.

27. The electronic payment method of claim 25 or 26, further comprising the step of transmitting to said merchant terminal a rejection message if the card number is not stored in said storage unit, by a notifying means.

28. A computer program product for making a computer to execute the steps of:
receiving from a merchant terminal a user identification information for identifying a user of a user terminal;
retrieving from a storage unit a card number corresponding to said identified user;
encrypting the retrieved card number;
generating a key for decryption of said encrypted card number; transmitting to said merchant terminal said encrypted card number; and
transmitting said key to a credit server managed by an issuer of the credit card.

29. The computer program product of claim 28, for making said computer to further execute the step of transmitting, when said receiving means receives said user identification, information said receiving unit transaction information to said user terminal and if confirmation of said transaction information form said user terminal is not received, stopping processing performed by any of said a receiving unit, an encrypting unit, a generating unit, a first transmitting unit, and a second transmitting unit, to terminate payment processing corresponding to the user identification information.

30. The computer program product of claim 28 or 29, for making said computer to further execute the step of transmitting to said merchant terminal a rejection message if the card number is not stored in said storage unit.

31. A computer readable storage medium for storing a computer program product for making a computer to execute the steps of:
receiving from a merchant terminal a user identification information for identifying a user of a user terminal;
retrieving from a storage unit a card number corresponding to said identified user;
encrypting the retrieved card number;
generating a key for decryption of said encrypted card number; transmitting to said merchant terminal said encrypted card number; and
transmitting said key to a credit server managed by an issuer of the credit card.

32. The storage medium of claim 31, for storing a computer program product for making said computer to further execute the steps of transmitting, when said receiving means receives said user identification, information said receiving unit transaction information to said user terminal and if confirmation of said transaction information form said user terminal is not received, stopping processing performed by any of said a receiving unit, an encrypting unit, a generating unit, a first transmitting unit, and a second transmitting unit, to terminate payment processing corresponding to the user identification information.

33. The storage medium of claim 31 or 32, for storing a computer program product for making said computer to further execute the step of transmitting to said merchant terminal a rejection message if the card number is not stored in said storage unit.
